(19) Europäisches Patentamt
European Patent Office
Office européen des brevets

(11) EP 3 792 307 B1

(12) # EUROPEAN PATENT SPECIFICATION

(45) Date of publication and mention of the grant of the patent:
**10.12.2025 Bulletin 2025/50**

(21) Application number: **19800144.8**

(22) Date of filing: **11.04.2019**

(51) International Patent Classification (IPC):
***C08L 9/06*** $^{(2006.01)}$ ***B60C 1/00*** $^{(2006.01)}$
***C08F 210/02*** $^{(2006.01)}$ ***C08F 212/00*** $^{(2006.01)}$
***C08F 212/02*** $^{(2006.01)}$ ***C08F 212/08*** $^{(2006.01)}$
***C08F 236/06*** $^{(2006.01)}$ ***C08F 236/08*** $^{(2006.01)}$
***C08F 236/10*** $^{(2006.01)}$ ***B60C 11/14*** $^{(2006.01)}$
***C08L 9/00*** $^{(2006.01)}$ ***C08L 15/00*** $^{(2006.01)}$

(52) Cooperative Patent Classification (CPC):
(C-Sets available)
**B60C 1/0016; C08F 210/02; C08F 236/06; C08L 9/00; C08L 15/00;** B60C 2011/145; B60C 2011/147; C08F 212/08; Y02T 10/86 (Cont.)

(86) International application number:
**PCT/JP2019/015828**

(87) International publication number:
**WO 2019/216110 (14.11.2019 Gazette 2019/46)**

(54) **VULCANIZED RUBBER COMPOSITION, TIRE TREAD AND TIRE**

VULKANISIERTE KAUTSCHUKZUSAMMENSETZUNG, REIFENLAUFFLÄCHE UND REIFEN

COMPOSITION DE CAOUTCHOUC VULCANISÉ, BANDE DE ROULEMENT ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2018 JP 2018089772**

(43) Date of publication of application:
**17.03.2021 Bulletin 2021/11**

(73) Proprietor: **Bridgestone Corporation**
**Chuo-Ku**
**Tokyo 104-8340 (JP)**

(72) Inventors:
- **SHODA Yasuhiro**
**Tokyo 104-8340 (JP)**
- **OISHI Shigeki**
**Tokyo 104-8340 (JP)**

(74) Representative: **Bardehle Pagenberg Partnerschaft mbB**
**Patentanwälte Rechtsanwälte**
**Prinzregentenplatz 7**
**81675 München (DE)**

(56) References cited:
**EP-A2- 1 535 959**
**WO-A1-2006/121069**
**WO-A1-2014/024466**
**WO-A1-2016/039005**
**WO-A1-2017/014064**
**JP-A- 2004 323 757**
**JP-A- 2006 052 263**
**JP-A- 2006 265 341**
**JP-A- 2008 290 282**
**JP-A- 2015 137 332**
**US-A1- 2006 205 890**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/06, C08F 4/52;**
**C08L 9/00, C08K 3/04, C08L 23/0807;**
C08F 210/02, C08F 236/06, C08F 212/08,
C08F 2500/32, C08F 2500/34, C08F 2500/27,
C08F 2500/35, C08F 2500/03, C08F 2500/36;
C08F 236/06, C08F 210/02

**Description**

TECHNICAL FIELD

This disclosure relates to a vulcanized rubber composition, a tire tread, and a tire.

BACKGROUND

Studless tires with softened tread rubber have been conventionally used as tires that can drive safely on ice in addition to on normal road surfaces. It has been known that softening a tread rubber improves the on-ice performance of a tire. However, tires provided with a soft tread rubber generally have a problem of poor wear resistance on a normal road surface, and the on-ice performance and the wear resistance of the tire are an antinomy.

Further, a method of blending organic fibers, glass fibers, or the like, which scratch an icy road surface to improve the on-ice performance of a tire, with a rubber composition used for a tread has been known as a method for improving the on-ice performance of a tire. However, when the aforementioned organic fibers, glass fibers, etc. are contained in the rubber composition, they act as fracture nuclei because they do not interact with a rubber, which causes a decrease in the fracture resistance (wear resistance) of a tread rubber.

Therefore, as a rubber composition for a tire that solves this problem, JP 2008-303334 A (PTL 1) describes a rubber composition in which 0.5 parts by weight to 20 parts by weight of potassium titanate fiber and 5 parts by weight to 200 parts by weight of carbon black having an iodine adsorption amount of 100 mg/g to 300 mg/g are blended with respect to 100 parts by weight of a rubber component containing natural rubber and butadiene rubber, for example. It is known that, by using the rubber composition in a cap tread of a tread having a two-layer structure consisting of a cap tread and a base tread, a decrease in the wear resistance is suppressed and the on-ice performance (performance on ice and snow) is improved.

CITATION LIST

Patent Literature

PTL 1: JP 2008-303334 A

SUMMARY

(Technical Problem)

According to the technique of PTL 1, although blending a specific amount of potassium titanate fiber has the effect of improving the on-ice performance (coefficient of friction on ice) of a tire (see Table 1, etc. of PTL 1), the wear resistance tends to be slightly decreased, and it is difficult to achieve both on-ice performance and wear resistance at a high level.

It could thus be helpful to provide a vulcanized rubber composition with which both the on-ice performance and the wear resistance of a tire can be achieved at a high level.

In addition, it could be helpful to provide a tire tread and a tire excellent in both on-ice performance and wear resistance.

(Solution to Problem)

We thus provide the following.

The vulcanized rubber composition of the present disclosure is according to claim 1 a vulcanized rubber composition comprising a rubber component that contains a multicomponent copolymer containing a conjugated diene unit, a non-conjugated olefin unit and an aromatic vinyl unit, where the vulcanized rubber composition has a plurality of voids, and an average diameter of the voids is 10 μm to 300 μm.

With such a structure, when the vulcanized rubber composition of the present disclosure is used in a tire, both on-ice performance and wear resistance can be achieved at a high level.

In the vulcanized rubber composition of the present disclosure, the void fraction of the vulcanized rubber composition is 10 % to 80 %. In this case, both the on-ice performance and the wear resistance of the vulcanized rubber composition can be achieved at a higher level.

In the multicomponent copolymer of the vulcanized rubber composition of the present disclosure, the content of the conjugated diene unit is preferably 1 mol% to 50 mol%, the content of the non-conjugated olefin unit is preferably 40 mol% to 97 mol%, and the content of the aromatic vinyl unit is preferably 2 mol% to 35 mol%. In this case, the wear

resistance and the weather resistance of the vulcanized rubber composition can be further improved.

In the vulcanized rubber composition of the present disclosure, the melting point of the multicomponent copolymer measured by a differential scanning calorimeter (DSC) is preferably 30 °C to 130 °C. In this case, the on-ice performance and the wear resistance of the vulcanized rubber composition can be further improved.

In the vulcanized rubber composition of the present disclosure, the absorption peak energy of the multicomponent copolymer measured by a differential scanning calorimeter (DSC) at 0 °C to 120 °C is preferably 10 J/g to 150 J/g. In this case, the on-ice performance and the wear resistance of the vulcanized rubber composition can be further improved.

In the vulcanized rubber composition of the present disclosure, the glass-transition temperature of the multicomponent copolymer measured by a differential scanning calorimeter (DSC) is preferably 0 °C or lower. In this case, the on-ice performance of the vulcanized rubber composition can be further improved.

In the vulcanized rubber composition of the present disclosure, the degree of crystallinity of the multicomponent copolymer is preferably 0.5 % to 50 %. In this case, the on-ice performance and the wear resistance of the vulcanized rubber composition can be further improved.

In the vulcanized rubber composition of the present disclosure, the non-conjugated olefin unit in the multicomponent copolymer is an acyclic non-conjugated olefin unit, and the acyclic non-conjugated olefin unit consists only of an ethylene unit. In this case, the weather resistance of the vulcanized rubber composition can be improved.

In the vulcanized rubber composition of the present disclosure, the aromatic vinyl unit in the multicomponent copolymer preferably contains a styrene unit. In this case, the weather resistance of the vulcanized rubber composition can be further improved.

In the vulcanized rubber composition of the present disclosure, the conjugated diene unit in the multicomponent copolymer preferably contains a 1,3-butadiene unit and/or an isoprene unit. In this case, the wear resistance of the vulcanized rubber composition can be further improved.

In the vulcanized rubber composition of the present disclosure, the content of the multicomponent copolymer in the rubber component is preferably 5 mass% to 100 mass%. In this case, the on-ice performance and the wear resistance of the vulcanized rubber composition can be further improved.

In the vulcanized rubber composition of the present disclosure, it is preferable that the vulcanized rubber composition further contain a void introducing agent, and it is more preferable that the void introducing agent be at least one selected from the group consisting of a foaming agent, a hydrophilic short fiber, a metal sulfate, a heat-expandable microcapsule, and a porous cellulose particle. In this case, the on-ice performance of the vulcanized rubber composition can be further improved.

In addition, the tire tread of the present disclosure uses the vulcanized rubber composition described above.

With such a structure, the tire tread of the present disclosure is excellent in both on-ice performance and wear resistance.

Further, the tire of the present disclosure comprises the tire tread described above.

With such a structure, the tire of the present disclosure is excellent in both on-ice performance and wear resistance.

(Advantageous Effect)

According to the present disclosure, it is possible to provide a vulcanized rubber composition with which both the on-ice performance and the wear resistance of a tire can be achieved at a high level.

In addition, according to the present disclosure, it is possible to provide a tire tread and a tire excellent in both on-ice performance and wear resistance.

## BRIEF DESCRIPTION OF THE DRAWINGS

In the accompanying drawings:

FIG. 1 schematically illustrates a plurality of voids existing in a vulcanized rubber composition of an embodiment of the present disclosure; and

FIG. 2 schematically illustrates a cross section of a void existing in a vulcanized rubber composition of an embodiment of the present disclosure.

## DETAILED DESCRIPTION

The following describes an embodiment of the vulcanized rubber composition, tire tread, and tire of the present disclosure with reference to the drawings as necessary.

<Vulcanized rubber composition>

The vulcanized rubber composition of the present disclosure is a vulcanized rubber composition having a rubber component that contains a multicomponent copolymer containing a conjugated diene unit, a non-conjugated olefin unit and an aromatic vinyl unit, where, as illustrated in FIG. 1, the vulcanized rubber composition 10 has a plurality of voids 20, and an average diameter of the voids 20 is 10 μm to 300 μm.

One of the characteristics of the multicomponent copolymer contained as a rubber component of the vulcanized rubber composition of the present disclosure is that, when microcrystals formed by chaining non-conjugated olefin units in the molecule collapse under high strain, the melting energy causes energy dissipation. In addition, since the vulcanized rubber composition has a plurality of voids, water generated from melted ice can enter the voids and escape, and the voids produce a scratching effect. As a result, the on-ice performance can be improved.

The vulcanized rubber composition 10 of the present disclosure contains the multicomponent copolymer described above and has a plurality of voids 20 having a specific size (average diameter: 10 μm to 300 μm), as illustrated in FIG. 1. Therefore, when the vulcanized rubber composition is applied to a tire, the on-ice performance can be improved, and the energy dissipation caused by the melting energy described above can be effectively exerted because large local distortion is produced.

As a result, when the vulcanized rubber composition of the present disclosure is used in a tire, the produced frictional energy can be dispersed, and the contact area between the tire and a surface of ice can be increased. Therefore, even if there are voids inside, both on-ice performance and wear resistance can be achieved at a high level.

The plurality of voids in the vulcanized rubber composition of the present disclosure has an average diameter of 10 μm to 300 μm, preferably an average diameter of 100 μm to 270 μm, and more preferably an average diameter of 135 μm to 250 μm. When the average diameter of the voids is less than 10 μm, sufficient on-ice performance cannot be obtained when used in a tire because the voids are too small, and sufficient wear resistance cannot be obtained because the energy dissipation effect caused by the melting energy is small. From the same viewpoint, the average diameter of the voids is preferably 100 μm or more and more preferably 135 μm or more. On the other hand, when the average diameter of the voids exceeds 300 μm, sufficient wear resistance cannot be obtained. From the same viewpoint, the average diameter of the voids is preferably 270 μm or less and more preferably 250 μm or less.

As used herein, the diameter of the void of the vulcanized rubber composition of the present disclosure means, as illustrated in FIG. 2, the largest diameter D of the void 20 (if the void is not spherical, the maximum distance D between any two points on the inner wall of the void).

The average diameter of the voids is the average value of the diameter D of the voids 20 existing in the vulcanized rubber composition of the present disclosure. In the present disclosure, a cross section of the vulcanized rubber composition is observed with a digital microscope ("VHX-100" manufactured by Keyence Corporation), and the average value of the diameters of all the voids existing in one field of view (2.5 mm × 2.5 mm) is obtained. Because the shape and size of the voids do not change significantly in one vulcanized rubber composition, the average value of the voids in one field of view can be taken as the average diameter of the voids of the vulcanized rubber composition of the present disclosure.

The void fraction of the vulcanized rubber composition of the present disclosure is 10 % to 80 %. By setting the lower limit of the void fraction to 10 %, the on-ice performance and the wear resistance can be improved more reliably. From the same viewpoint, the void fraction is preferably 15 % or more and more preferably 20 % or more. On the other hand, by setting the upper limit of the void fraction to 80 %, the decrease in wear resistance can be suppressed more reliably even when there is a plurality of voids. From the same viewpoint, the void fraction is preferably 60 % or less and more preferably 40 % or less. The void fraction is a ratio (vol%) of the volume of the voids in the vulcanized rubber composition of the present disclosure. The method of measuring the void fraction is not particularly limited, and the measurement can be performed using, for example, a densimeter (ViBRA densimeter "DMA-220" manufactured by SHINKO DENSHI CO., LTD.) or the like.

The vulcanized rubber composition of the present disclosure has a plurality of voids, yet the method of providing the voids is not particularly limited. A known technique can be used depending on the conditions of the voids, the equipment for producing the vulcanized rubber composition, and the like.

Examples thereof include a method of blending a foaming agent, a hydrophilic short fiber, a metal sulfate salt, a heat-expandable microcapsule, a porous cellulose particle, etc. in the rubber composition before vulcanization to provide voids in the vulcanized rubber composition, as will be described later.

The vulcanized rubber composition is a vulcanized rubber obtained by vulcanizing an unvulcanized rubber composition. The vulcanization conditions (temperature and time) are not particularly limited, and the vulcanization treatment can be performed under any conditions according to the required performance.

The unvulcanized rubber composition (hereinafter, may be simply referred to as "rubber composition") which is the basis of the vulcanized rubber composition of the present disclosure will be described below.

The rubber composition contains a rubber component (a), and the rubber component (a) contains a multicomponent copolymer (a1) containing a conjugated diene unit, a non-conjugated olefin unit, and an aromatic vinyl unit.

The multicomponent copolymer (a1) contains at least a conjugated diene unit, a non-conjugated olefin unit, and an aromatic vinyl unit. It may consist only of a conjugated diene unit, a non-conjugated olefin unit, and an aromatic vinyl unit, and may further contain other monomer units.

The conjugated diene unit is a constitutional unit derived from a conjugated diene compound as a monomer. The conjugated diene compound preferably has 4 to 8 carbon atoms. Specific examples of the conjugated diene compound include 1,3-butadiene, isoprene, 1,3-pentadiene, and 2,3-dimethyl-1,3-butadiene. The conjugated diene compound may be used alone or in combination of two or more. The conjugated diene compound as a monomer in the multicomponent copolymer preferably contains 1,3-butadiene and/or isoprene, more preferably consists only of 1,3-butadiene and/or isoprene, and further preferably consists only of 1,3-butadiene, from the viewpoint of effectively improving the wear resistance of a vulcanized rubber composition, a tire, etc. using the obtained multicomponent copolymer. In other words, the conjugated diene unit in the multicomponent copolymer preferably contains a 1,3-butadiene unit and/or an isoprene unit, more preferably consists only of a 1,3-butadiene unit and/or an isoprene unit, and further preferably consists only of a 1,3-butadiene unit.

The content of the conjugated diene unit in the multicomponent copolymer (a1) is preferably 1 mol% or more and more preferably 3 mol% or more, and preferably 50 mol% or less, more preferably 40 mol% or less, still more preferably 30 mol% or less, even more preferably 25 mol% or less, and further preferably 15 mol% or less. When the content of the conjugated diene unit is 1 mol% or more of the total amount of the multicomponent copolymer, a vulcanized rubber composition and a rubber product having excellent elongation can be obtained, which is preferred. When the content is 50 mol% or less, the weather resistance is excellent. The content of the conjugated diene unit is preferably in a range of 1 mol% to 50 mol% and more preferably in a range of 3 mol% to 40 mol% of the total amount of the multicomponent copolymer.

The non-conjugated olefin unit is a constitutional unit derived from a non-conjugated olefin compound as a monomer. The non-conjugated olefin compound as a monomer in the multicomponent copolymer is an acyclic non-conjugated olefin compound, and the acyclic non-conjugated olefin compound is an $\alpha$-olefin consisting only of ethylene, from the viewpoint of further reducing the crystallinity of the obtained multicomponent copolymer and further improving the weather resistance of a vulcanized rubber composition, a tire, etc. using the multicomponent copolymer. In other words, the non-conjugated olefin unit in the multicomponent copolymer is an acyclic non-conjugated olefin unit, and the acyclic non-conjugated olefin unit is an $\alpha$-olefin unit consisting only of an ethylene unit.

The content of the non-conjugated olefin unit in the multicomponent copolymer (a1) is preferably 40 mol% or more, more preferably 45 mol% or more, still more preferably 55 mol% or more, and further preferably 60 mol% or more, and preferably 97 mol% or less, more preferably 95 mol% or less, and still more preferably 90 mol% or less. When the content of the non-conjugated olefin unit is 40 mol% or more of the total amount of the multicomponent copolymer, the content of the conjugated diene unit or the aromatic vinyl unit decreases as a result, the weather resistance is improved, and the breaking resistance at room temperature (particularly the rupture strength (Tb)) is improved. Further, when the content of the non-conjugated olefin unit is 97 mol% or less, the content of the conjugated diene unit or the aromatic vinyl unit increases as a result, and the breaking resistance at high temperature (particularly the elongation at break (Eb)) is improved. The content of the non-conjugated olefin unit is preferably in a range of 40 mol% to 97 mol%, more preferably in a range of 45 mol% to 95 mol%, and still more preferably in a range of 55 mol% to 90 mol% of the total amount of the multicomponent copolymer.

The aromatic vinyl unit is a constitutional unit derived from an aromatic vinyl compound as a monomer. The aromatic vinyl compound preferably has 8 to 10 carbon atoms. Examples of the aromatic vinyl compound include styrene, o-methylstyrene, m-methylstyrene, p-methylstyrene, o,p-dimethylstyrene, o-ethylstyrene, m-ethylstyrene, and p-ethylstyrene. The aromatic vinyl compound may be used alone or in combination of two or more. The aromatic vinyl compound as a monomer in the multicomponent copolymer preferably contains styrene and more preferably consists only of styrene, from the viewpoint of further reducing the crystallinity of the obtained multicomponent copolymer and further improving the weather resistance of a vulcanized rubber composition, a tire, etc. using the multicomponent copolymer. In other words, the aromatic vinyl unit in the multicomponent copolymer preferably contains a styrene unit and more preferably consists only of a styrene unit.

Note that an aromatic ring in the aromatic vinyl unit is not included in the main chain of the multicomponent copolymer unless it is bonded to an adjacent unit.

The content of the aromatic vinyl unit in the multicomponent copolymer (a1) is preferably 2 mol% or more and more preferably 3 mol% or more, and preferably 35 mol% or less, more preferably 30 mol% or less, and still more preferably 25 mol% or less. When the content of the aromatic vinyl unit is 2 mol% or more, the breaking resistance at high temperature is improved. Further, when the content of the aromatic vinyl unit is 35 mol% or less, the effect of the conjugated diene unit and the non-conjugated olefin unit is remarkable. The content of the aromatic vinyl unit is preferably in a range of 2 mol% to 35 mol%, more preferably in a range of 3 mol% to 30 mol%, and still more preferably in a range of 3 mol% to 25 mol% of the total amount of the multicomponent copolymer.

The number of types of monomers in the multicomponent copolymer (a1) is not particularly limited, as long as the multicomponent copolymer contains the conjugated diene unit, the non-conjugated olefin unit, and the aromatic vinyl unit. The multicomponent copolymer (a1) may have other constitutional units other than the conjugated diene unit, the non-conjugated olefin unit, and the aromatic vinyl unit. From the viewpoint of achieving desired effects, the content of the other constitutional units is preferably 30 mol% or less, more preferably 20 mol% or less, still more preferably 10 mol% or less, and further preferably 0 mol%, i.e. the multicomponent copolymer contains no other constitutional unit, of the total amount of the multicomponent copolymer.

From the viewpoint of achieving preferred wear resistance, weather resistance and crystallinity, the multicomponent copolymer (a1) is preferably a copolymer obtained by performing polymerization at least using one type of conjugated diene compound, one type of non-conjugated olefin compound, and one type of aromatic vinyl compound as monomers. In other words, the multicomponent copolymer (a1) is preferably a multicomponent copolymer containing one type of conjugated diene compound, one type of non-conjugated olefin compound, and one type of aromatic vinyl compound, more preferably a ternary copolymer consisting only of one type of conjugated diene unit, one type of non-conjugated olefin unit, and one type of aromatic vinyl unit, and further preferably a ternary copolymer consisting only of a 1,3-butadiene unit, an ethylene unit, and a styrene unit. As used herein, the term "one type of conjugated diene unit" includes conjugated diene units having different binding modes.

Furthermore, in the multicomponent copolymer (a1), the content of the conjugated diene unit is preferably 1 mol% to 50 mol%, the content of the non-conjugated olefin unit is preferably 40 mol% to 97 mol%, and the content of the aromatic vinyl unit is preferably 2 mol% to 35 mol%. In this case, the wear resistance of the vulcanized rubber composition is further improved, and the weather resistance is also improved.

The polystyrene-equivalent weight-average molecular weight (Mw) of the multicomponent copolymer (a1) is preferably 10,000 to 10,000,000, more preferably 100,000 to 9,000,000, and still more preferably 150,000 to 8,000,000, more preferably. When the Mw of the multicomponent copolymer is 10,000 or more, the mechanical strength of the vulcanized rubber composition can be sufficiently ensured, and when the Mw is 10,000,000 or less, high operability can be maintained.

The polystyrene-equivalent number-average molecular weight (Mn) of the multicomponent copolymer (a1) is preferably 10,000 to 10,000,000, more preferably 50,000 to 9,000,000, and still more preferably 100,000 to 8,000,000. When the Mn of the multicomponent copolymer is 10,000 or more, the mechanical strength of the vulcanized rubber composition can be sufficiently ensured, and when the Mn is 10,000,000 or less, high operability can be maintained.

The molecular weight distribution [Mw/Mn (weight-average molecular weight/ number-average molecular weight)] of the multicomponent copolymer (a1) is preferably 1.00 to 4.00, more preferably 1.50 to 3.50, and still more preferably 1.80 to 3.00. When the molecular weight distribution of the multicomponent copolymer is 4.00 or less, sufficient homogeneity can be provided in physical properties of the multicomponent copolymer.

The weight-average molecular weight (Mw), number-average molecular weight (Mn), and molecular weight distribution (Mw/Mn) described above are obtained through gel permeation chromatography (GPC) using polystyrene as a standard substance.

The melting point of the multicomponent copolymer (a1) measured by a differential scanning calorimeter (DSC) is preferably 30 °C to 130 °C and more preferably 30 °C to 110 °C. When the melting point of the multicomponent copolymer (a1) is 30 °C or higher, the crystallinity of the multicomponent copolymer (a1) is high, and the wear resistance of the vulcanized rubber composition is further improved. When the melting point is 130 °C or lower, the on-ice performance is further improved.

As used herein, the melting point is a value measured with the method described in the EXAMPLES section.

The absorption peak energy of the multicomponent copolymer (a1) measured by a differential scanning calorimeter (DSC) at 0 °C to 120 °C is preferably 10 J/g to 150 J/g and more preferably 30 J/g to 120 J/g. When the absorption peak energy of the multicomponent copolymer (a1) is 10 J/g or more, the crystallinity of the multicomponent copolymer (a1) is high, and the wear resistance of the vulcanized rubber composition is further improved. When the absorption peak energy is 150 J/g or less, the on-ice performance is further improved.

As used herein, the absorption peak energy is a value measured with the method described in the EXAMPLES section.

The glass-transition temperature (Tg) of the multicomponent copolymer (a1) measured by a differential scanning calorimeter (DSC) is preferably 0 °C or lower and more preferably -100 °C to -10 °C. When the glass-transition temperature of the multicomponent copolymer (A1) is 0 °C or lower, the on-ice performance of the vulcanized rubber composition is further improved.

As used herein, the glass-transition temperature is a value measured with the method described in the EXAMPLES section.

The degree of crystallinity of the multicomponent copolymer (a1) is preferably 0.5 % to 50 %, more preferably 3 % to 45 %, and still more preferably 5 % to 45 %. When the degree of crystallinity of the multicomponent copolymer (a1) is 0.5 % or more, the crystallinity produced by the non-conjugated olefin unit is sufficiently secured, and the wear resistance of

the vulcanized rubber composition is further improved. When the degree of crystallinity of the multicomponent copolymer (a1) is 50 % or less, the operability during the kneading of the rubber composition is improved, and the on-ice performance of the vulcanized rubber composition is also improved.

As used herein, the degree of crystallinity is a value measured with the method described in the EXAMPLES section.

The multicomponent copolymer (a1) preferably has a main chain consisting only of an acyclic structure, which can further improve the wear resistance. NMR is used as a principal measurement means for determining whether or not the main chain of the copolymer has a cyclic structure. Specifically, in the case where a peak derived from a cyclic structure existing in the main chain (for example, a peak appearing at 10 ppm to 24 ppm in the case of three- to five-membered rings) is not observed, it is determined that the main chain of the copolymer consists only of an acyclic structure.

The multicomponent copolymer (a1) can be produced through a polymerization step in which the conjugated diene compound, the non-conjugated olefin compound, and the aromatic vinyl compound are used as monomers. In addition, a coupling step, a cleaning step, and other steps may be optionally performed.

In the production of the multicomponent copolymer (a1), it is preferable to add only the non-conjugated olefin compound and the aromatic vinyl compound in the presence of a catalyst without adding the conjugated diene compound, and polymerize them. Particularly in the case of using a polymerization catalyst composition described later, it tends to be difficult to polymerize the non-conjugated olefin compound and/or the aromatic vinyl compound in the presence of the conjugated diene compound, because the conjugated diene compound has higher reactivity than the non-conjugated olefin compound and the aromatic vinyl compound. In addition, it tends to be difficult to polymerize the conjugated diene compound first and then additionally polymerize the non-conjugated olefin compound and the aromatic vinyl compound, given the properties of the catalyst.

The polymerization method may be any polymerization method such as solution polymerization, suspension polymerization, liquid phase bulk polymerization, emulsion polymerization, gas phase polymerization, or solid phase polymerization. In the case of using a solvent in the polymerization reaction, any solvent that is inactive in the polymerization reaction can be used. Examples thereof include toluene, cyclohexane, and normal hexane.

The polymerization step may be performed in one stage, or in multiple (i.e. two or more) stages. The polymerization step in one stage is a step of causing simultaneous reaction of all types of monomers to be polymerized, i.e. the conjugated diene compound, the non-conjugated olefin compound, the aromatic vinyl compound, and other monomers, and preferably the conjugated diene compound, the non-conjugated olefin compound, and the aromatic vinyl compound, to polymerize them. The polymerization step in multiple stages is a step of first causing reaction of the whole or part of one or two types of monomers to form a polymer (first polymerization stage) and then performing one or more stages (second to last polymerization stages) in which the remaining types of monomers and the balance of the one or two types of monomers is added to polymerize them. Particularly in the production of the multicomponent copolymer, the polymerization step is preferably performed in multiple stages.

In the polymerization step, the polymerization reaction is preferably performed in an atmosphere of inert gas and preferably nitrogen gas or argon gas. The polymerization temperature of the polymerization reaction is not particularly limited, yet it is preferably in a range of -100 °C to 200 °C as an example and may be approximately room temperature. The pressure of the polymerization reaction is preferably in a range of 0.1 MPa to 10.0 MPa in order to sufficiently incorporate the conjugated diene compound into the polymerization reaction system. The reaction time of the polymerization reaction is not particularly limited and may be selected as appropriate depending on conditions such as the polymerization catalyst type and the polymerization temperature. For example, the reaction time is preferably in a range of 1 second to 10 days.

In the polymerization step of the conjugated diene compound, the polymerization may be terminated using a terminator such as methanol, ethanol, or isopropanol.

The polymerization step is preferably carried out in multiple stages. It is more preferable to perform a first step of mixing a first monomer material containing at least the aromatic vinyl compound and a polymerization catalyst to obtain a polymerization mixture, and a second step of introducing, into the polymerization mixture, a second monomer material containing at least one selected from the group consisting of the conjugated diene compound, the non-conjugated olefin compound, and the aromatic vinyl compound. It is still more preferable that the first monomer material do not contain the conjugated diene compound and the second monomer material contain the conjugated diene compound.

The first monomer material used in the first step may contain the non-conjugated olefin compound in addition to the aromatic vinyl compound. The first monomer material may contain the whole or part of the aromatic vinyl compound to be used. The non-conjugated olefin compound is contained in at least one of the first monomer material and the second monomer material.

The first step is preferably performed in an atmosphere of inert gas, preferably nitrogen gas or argon gas, in a reactor. The temperature (reaction temperature) in the first step is not particularly limited, yet it is preferably in a range of -100 °C to 200 °C as an example and may be approximately room temperature. The pressure in the first step is not particularly limited, yet it is preferably in a range of 0.1 MPa to 10.0 MPa in order to sufficiently incorporate the aromatic vinyl compound into the polymerization reaction system. The time (reaction time) in the first step may be selected as appropriate

depending on conditions such as the polymerization catalyst type and the reaction temperature. For example, in the case where the reaction temperature is 25 °C to 80 °C, the reaction time is preferably in a range of 5 minutes to 500 minutes.

The polymerization method for obtaining the polymerization mixture in the first step may be any method such as solution polymerization, suspension polymerization, liquid phase bulk polymerization, emulsion polymerization, gas phase polymerization, or solid phase polymerization. In the case of using a solvent in the polymerization reaction, any solvent that is inactive in the polymerization reaction can be used. Examples thereof include toluene, cyclohexanone, and normal hexane.

The second monomer material used in the second step preferably contains: only the conjugated diene compound; the conjugated diene compound and the non-conjugated olefin compound; the conjugated diene compound and the aromatic vinyl compound; or the conjugated diene compound, the non-conjugated olefin compound, and the aromatic vinyl compound.

In the case where the second monomer material contains at least one selected from the group consisting of the non-conjugated olefin compound and the aromatic vinyl compound besides the conjugated diene compound, these monomer materials may be mixed together with a solvent or the like beforehand and then introduced into the polymerization mixture. Alternatively, each monomer material may be introduced in an individual state. The monomer materials may be added simultaneously or sequentially. The method of introducing the second monomer material into the polymerization mixture in the second step is not particularly limited, yet it is preferable to add each monomer material continuously to the polymerization mixture while controlling the flow rate (i.e. metering). In the case of using the monomer material that is gas under the conditions of the polymerization reaction system (for example, ethylene as the non-conjugated olefin compound under the conditions of room temperature and normal pressure), the monomer material can be introduced into the polymerization reaction system at predetermined pressure.

The second step is preferably performed in an atmosphere of inert gas, preferably nitrogen gas or argon gas, in a reactor. The temperature (reaction temperature) in the second step is not particularly limited, yet it is preferably in a range of -100 °C to 200 °C as an example and may be approximately room temperature. When the reaction temperature is increased, the selectivity of cis-1,4 bond in the conjugated diene unit may decrease. The pressure in the second step is not particularly limited, yet it is preferably in a range of 0.1 MPa to 10.0 MPa in order to sufficiently incorporate the monomer(s) such as the conjugated diene compound into the polymerization reaction system. The time (reaction time) in the second step may be selected as appropriate depending on conditions such as the polymerization catalyst type and the reaction temperature. For example, the reaction time is preferably in a range of 0.1 hours to 10 days.

In the second step, the polymerization reaction may be terminated using a terminator such as methanol, ethanol, or isopropanol.

The polymerization step of the non-conjugated olefin compound, the aromatic vinyl compound, and the conjugated diene compound described above preferably includes a step of polymerizing various monomers in the presence of catalyst components listed below.

Examples of the catalyst component include components (A) to (F), and one or more of the components can be used. It is more preferable to combine two or more of the following components (A) to (F) and use them as a catalyst composition.

Component (A): a rare earth element compound or a reaction product of the rare earth element compound and a Lewis base
Component (B): an organometallic compound
Component (C): an aluminoxane
Component (D): an ionic compound
Component (E): a halogen compound
Component (F): a cyclopentadiene skeleton-containing compound selected from a substituted or unsubstituted cyclopentadiene (a compound having a cyclopentadienyl group), a substituted or unsubstituted indene (a compound having an indenyl group), and a substituted or unsubstituted fluorene (a compound having a fluorenyl group) (hereinafter, may be simply referred to as "cyclopentadiene skeleton-containing compound").

The following describes the components (A) to (F) in detail.

Examples of the rare earth element compound or a reaction product of the rare earth element compound and a Lewis base (component (A)) include a rare earth element compound or a reaction product of the rare earth element compound and a Lewis base having a rare earth element-carbon bond (hereinafter, also referred to as "component (A-1)"), and a rare earth element compound or a reaction product of the rare earth element compound and a Lewis base having no rare earth element-carbon bond (hereinafter, also referred to as "component (A-2)").

(A-1) the rare earth element compound or the reaction product having a rare earth element-carbon bond

The component (A-1), for example, contains at least one complex selected from the group consisting of a metallocene complex represented by the following general formula (I), a metallocene complex represented by the

following general formula (II), and a half metallocene cation complex represented by the following general formula (III):

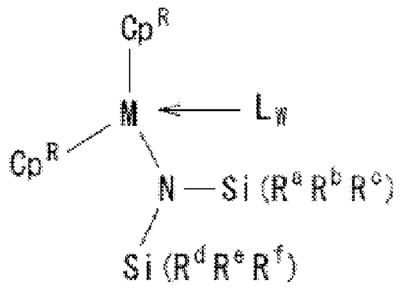

. . . (I)

(where M represents a lanthanoid element, scandium or yttrium; each $Cp^R$ independently represents an unsubstituted or substituted indenyl; $R^a$ to $R^f$ each independently represent an alkyl group having 1 to 3 carbon atoms or a hydrogen atom; L represents a neutral Lewis base; and w represents an integer of 0 to 3);

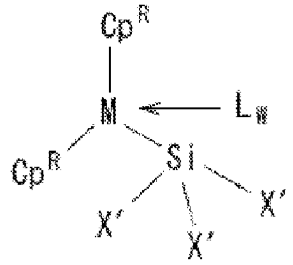

. . . (II)

(where M represents a lanthanoid element, scandium or yttrium; each $Cp^R$ independently represents an unsubstituted or substituted indenyl; X' represents a hydrogen atom, a halogen atom, an alkoxy group, a thiolate group, an amino group, a silyl group, or a monovalent hydrocarbon group having 1 to 20 carbon atoms; L represents a neutral Lewis base; and w represents an integer of 0 to 3);

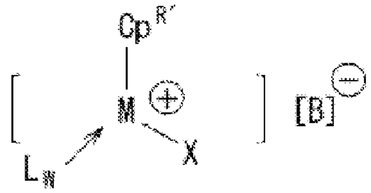

. . . (III)

(where M represents a lanthanoid element, scandium or yttrium; $Cp^{R'}$ represents an unsubstituted or substituted cyclopentadienyl, indenyl, or fluorenyl; X represents a hydrogen atom, a halogen atom, an alkoxy group, a thiolate group, an amino group, a silyl group, or a monovalent hydrocarbon group having 1 to 20 carbon atoms; L represents a neutral Lewis base; w represents an integer of 0 to 3; and $[B]^-$ represents a non-coordinating anion).

In the metallocene complex represented by each of the general formulae (I) and (II), $Cp^R$ is an unsubstituted indenyl or a substituted indenyl. $Cp^R$ having an indenyl ring as a basic skeleton may be represented by $C_9H_{7-x}R_x$ or $C_9H_{11-x}R_x$. Here, X is an integer of 0 to 7 or 0 to 11. Each R is preferably independently a hydrocarbyl group or a metalloid group. The hydrocarbyl group preferably has 1 to 20 carbon atoms, more preferably has 1 to 10 carbon atoms, and further preferably has 1 to 8 carbon atoms. Preferred specific examples of the hydrocarbyl group include a methyl group, an ethyl group, a phenyl group, and a benzyl group. On the other hand, examples of metalloid in the metalloid group include germyl (Ge), stannyl (Sn), and silyl (Si). The metalloid group preferably has a hydrocarbyl group which is the same as the hydrocarbyl group described above. Specific examples of the metalloid group include a trimethylsilyl group. Specific examples of the substituted indenyl include 2-phenyl indenyl and 2-methyl indenyl. Two $Cp^R$ in the general formulae (I) and (II) may be the same with or different from each other.

In the half metallocene cation complex represented by the general formula (III), $Cp^{R'}$ is an unsubstituted or substituted cyclopentadienyl, indenyl, or fluorenyl, among which an unsubstituted or substituted indenyl is preferred.

In the general formula (III), $Cp^{R'}$ having the cyclopentadienyl ring as a basic skeleton is represented by $C_5H_{5-x}R_x$. Here, X is an integer of 0 to 5. Each R is preferably independently a hydrocarbyl group or a metalloid group. The

hydrocarbyl group preferably has 1 to 20 carbon atoms, more preferably has 1 to 10 carbon atoms, and further preferably has 1 to 8 carbon atoms. Preferred specific examples of the hydrocarbyl group include a methyl group, an ethyl group, a phenyl group, and a benzyl group. On the other hand, examples of metalloid in the metalloid group include germyl (Ge), stannyl (Sn), and silyl (Si). The metalloid group preferably has a hydrocarbyl group which is the same as the hydrocarbyl group described above. Specific examples of the metalloid group include a trimethylsilyl group. $Cp^{R'}$ having a cyclopentadienyl ring as a basic skeleton is specifically exemplified by the following:

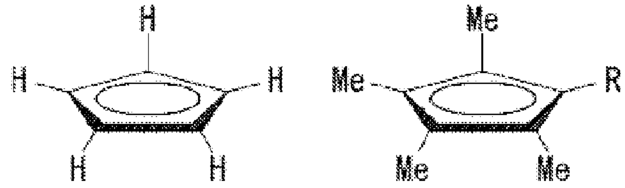

(where R represents a hydrogen atom, a methyl group, or an ethyl group).

In the general formula (III), $Cp^{R'}$ having the indenyl ring as a basic skeleton is similarly defined as $Cp^R$ of the general formulae (I) and (II), and preferred examples are the same as above.

In the general formula (III), $Cp^{R'}$ having the fluorenyl ring as a basic skeleton may be represented by $C_{13}H_{9-x}R_x$ or $C_{13}H_{17-x}R_x$. Here, X is an integer of 0 to 9 or 0 to 17. Each R is preferably independently a hydrocarbyl group or a metalloid group. The hydrocarbyl group preferably has 1 to 20 carbon atoms, more preferably has 1 to 10 carbon atoms, and further preferably has 1 to 8 carbon atoms. Preferred specific examples of the hydrocarbyl group include a methyl group, an ethyl group, a phenyl group, and a benzyl group. On the other hand, examples of metalloid in the metalloid group include germyl Ge, stannyl Sn, and silyl Si. The metalloid group preferably has a hydrocarbyl group which is the same as the hydrocarbyl group described above. Specific examples of the metalloid group include a trimethylsilyl group.

The central metal M in the general formulae (I), (II), and (III) is a lanthanoid element, scandium, or yttrium. Lanthanoid elements include 15 elements with atomic numbers 57 to 71, any of which may be used. Preferred examples of the central metal M include samarium Sm, neodymium Nd, praseodymium Pr, gadolinium Gd, cerium Ce, holmium Ho, scandium Sc, and yttrium Y.

The metallocene complex represented by the general formula (I) includes a silyl amide ligand [$-N(SiR_3)_2$]. Each R group ($R^a$ to $R^f$ in the general formula (I)) contained in the silyl amide ligand is independently an alkyl group having 1 to 3 carbon atoms or a hydrogen atom, and at least one of $R^a$ to $R^f$ is preferably a hydrogen atom. As a result of at least one of $R^a$ to $R^f$ being a hydrogen atom, the catalyst can be synthesized easily, and the bulk around silicon can be reduced, facilitating introduction of the non-conjugated olefin compound and the aromatic vinyl compound. From the same viewpoint, it is more preferable that at least one of $R^a$ to $R^c$ be a hydrogen atom and at least one of $R^d$ to $R^f$ be a hydrogen atom. The alkyl group is preferably a methyl group.

The metallocene complex represented by the general formula (II) includes a silyl ligand [$-SiX'_3$]. X' contained in the silyl ligand [$-SiX'_3$] is a group defined in the same way as X in the general formula (III) described below, and preferred examples are the same as those of X in the general formula (III).

In the general formula (III), X is a group selected from the group consisting of a hydrogen atom, a halogen atom, an alkoxy group, a thiolate group, an amino group, a silyl group, and a monovalent hydrocarbon group having 1 to 20 carbon atoms. The halogen atom represented by X may be any of a fluorine atom, a chlorine atom, a bromine atom, and an iodine atom, with a chlorine atom or a bromine atom being preferred.

In the general formula (III), examples of the alkoxy group represented by X include aliphatic alkoxy groups such as a methoxy group, an ethoxy group, a propoxy group, an n-butoxy group, an isobutoxy group, a sec-butoxy group, and a tert-butoxy group; and aryl oxide groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group, among which a 2,6-di-tert-butylphenoxy group is preferred.

In the general formula (III), examples of the thiolate group represented by X include aliphatic thiolate groups such as a thiomethoxy group, a thioethoxy group, a thiopropoxy group, a thio-n-butoxy group, a thioisobutoxy group, a thio-sec-butoxy group, and a thio-tert-butoxy group; and aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group, among which a 2,4,6-triisopropylthiophenoxy group is preferred.

In the general formula (III), examples of the amino group represented by X include aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; and bistrialkylsilylamino groups such as a bistrimethylsilylamino group, among which a bistrimethylsilylamino group is preferred.

In the general formula (III), examples of the silyl group represented by X include a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group, among which a tris(trimethylsilyl)silyl group is preferred.

In the general formula (III), specific examples of the monovalent hydrocarbon group having 1 to 20 carbon atoms represented by X include linear or branched aliphatic hydrocarbon groups such as a methyl group, an ethyl group, an n-propyl group, an isopropyl group, an n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; aralkyl groups such as a benzyl group; and hydrocarbon groups such as a trimethylsilylmethyl group and a bistrimethylsilylmethyl group each containing a silicon atom, among which a methyl group, an ethyl group, an isobutyl group, a trimethylsilylmethyl group, and the like are preferred. In the general formula (III), X is preferably a bistrimethylsilylamino group or a monovalent hydrocarbon group having 1 to 20 carbon atoms.

In the general formula (III), examples of the non-coordinating anion represented by $[B]^-$ include tetravalent boron anions. Specific examples of the tetravalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl) borate, [tris(pentafluorophenyl), phenyl]borate, and tridecahydride-7,8-dicarbaundecaborate, among which tetrakis(pentafluorophenyl)borate is preferred.

The metallocene complexes represented by the general formulae (I) and (II) and the half metallocene cation complex represented by the general formula (III) further include zero to three, preferably zero or one neutral Lewis base L. Examples of the neutral Lewis base L include tetrahydrofuran, diethyl ether, dimethylaniline, trimethylphosphine, lithium chloride, neutral olefins, and neutral diolefins. In the case where the complex includes a plurality of neutral Lewis bases L, the neutral Lewis bases L may be the same or different.

The metallocene complexes represented by the general formulae (I) and (II) and the half metallocene cation complex represented by the general formula (III) may be present as a monomer or as a dimer or a multimer.

The metallocene complex represented by the general formula (I) can be obtained by, for example, subjecting a lanthanoid trishalide, a scandium trishalide, or a yttrium trishalide to reaction in a solvent with a salt of indenyl (for example, a potassium salt or a lithium salt) and a salt of bis(trialkylsilyl) amine (for example, a potassium salt or a lithium salt). The reaction temperature may be set to approximately room temperature, and thus the complex can be produced under mild conditions. The reaction time is not limited and may be about several hours to several tens of hours. The reaction solvent is not particularly limited, yet it is preferably a solvent that dissolves a raw material and a product. For example, toluene may be used. A reaction example for obtaining the metallocene complex represented by the general formula (I) is given below.

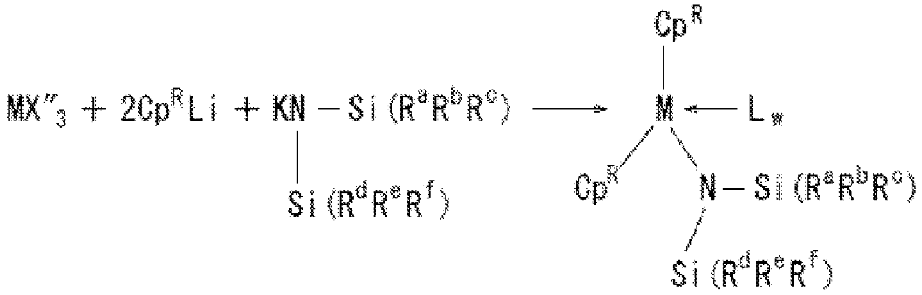

(I)

(where X" represents a halide).

The metallocene complex represented by the general formula (II) can be obtained by, for example, subjecting a lanthanoid trishalide, a scandium trishalide, or a yttrium trishalide to reaction in a solvent with a salt of indenyl (for example, a potassium salt or a lithium salt) and a salt of silyl (for example, a potassium salt or a lithium salt). The reaction temperature may be set to approximately room temperature, and thus the complex can be produced under mild conditions. The reaction time is not limited and may be about several hours to several tens of hours. The reaction solvent is not particularly limited, yet it is preferably a solvent that dissolves a raw material and a product. For example, toluene may be used. A reaction example for obtaining the metallocene complex represented by the general formula (II) is given below.

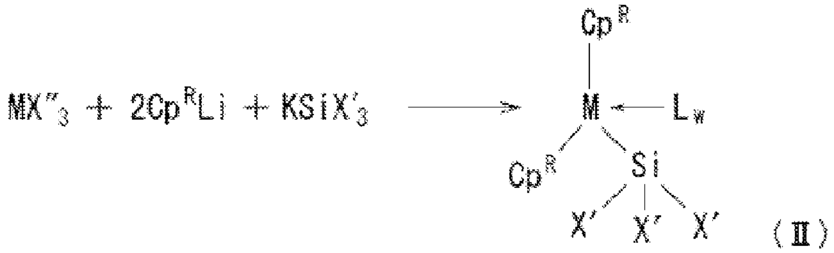

(where X" represents a halide).

The half metallocene cation complex represented by the general formula (III) can be obtained by, for example, the following reaction.

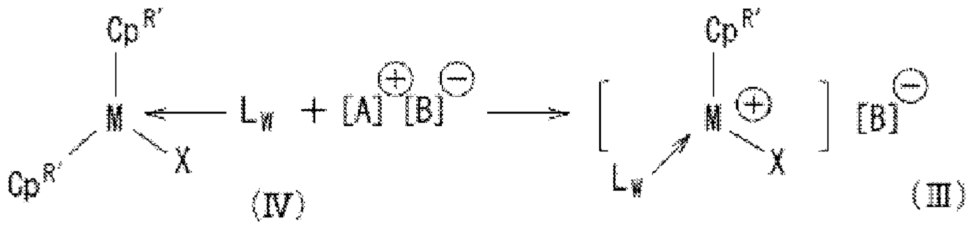

In a compound represented by the general formula (IV), M represents a lanthanoid element, scandium, or yttrium, each $Cp^{R'}$ independently represents an unsubstituted or substituted cyclopentadienyl, indenyl, or fluorenyl, X represents a hydrogen atom, a halogen atom, an alkoxy group, a thiolate group, an amino group, a silyl group, or a monovalent hydrocarbon group having 1 to 20 carbon atoms, L represents a neutral Lewis base, and w represents an integer of 0 to 3. In an ionic compound represented by the general formula $[A]^+[B]^-$, $[A]^+$ represents a cation, and $[B]^-$ represents a non-coordinating anion.

Examples of the cation represented by $[A]^+$ include a carbonium cation, an oxonium cation, an amine cation, a phosphonium cation, a cycloheptatrienyl cation, and a ferrocenium cation containing a transition metal. Examples of the carbonium cation include trisubstituted carbonium cations such as a triphenylcarbonium cation and a tri(substituted phenyl)carbonium cation. Specific examples of the tri(substituted phenyl)carbonium cation include a tri(methylphenyl) carbonium cation. Examples of the amine cation include trialkylammonium cations such as a trimethylammonium cation, a triethylammonium cation, a tripropylammonium cation, and a tributylammonium cation; N,N-dialkylanilinium cations such as a N,N-dimethylanilinium cation, a N,N-diethylanilinium cation, and a N,N,2,4,6-pentamethylanilinium cation; and dialkylammonium cations such as a diisopropylammonium cation and a dicyclohexylammonium cation. Examples of the phosphonium cation include triarylphosphonium cations such as a triphenylphosphonium cation, a tri(methylphenyl) phosphonium cation, and a tri(dimethylphenyl)phosphonium cation. Among these cations, a N,N-dialkylanilinium cation or a carbonium cation is preferred, and a N,N-dialkylanilinium cation is particularly preferred.

The ionic compound represented by the general formula $[A]^+[B]^-$ used in the reaction is a compound obtained by combining a non-coordinating anion and a cation respectively selected from the aforementioned non-coordinating anions and cations, with N,N-dimethylanilinium tetrakis(pentafluorophenyl)borate and triphenylcarbonium tetrakis(pentafluorophenyl)borate being preferred. The ionic compound represented by the general formula $[A]^+[B]^-$ is added in an amount of preferably 0.1 times to 10 times mol and more preferably about 1 time mol, with respect to the metallocene complex. When the half metallocene cation complex represented by the general formula (III) is used in polymerization reaction, the half metallocene cation complex represented by the general formula (III) may be directly supplied to the polymerization reaction system, or the compound represented by the general formula (IV) and the ionic compound represented by the general formula $[A]^+[B]^-$ used in the reaction may be separately supplied to the polymerization reaction system, to form the half metallocene cation complex represented by the general formula (III) in the reaction system. The half metallocene cation complex represented by the general formula (III) may be formed in the reaction system by using the metallocene complex represented by the general formula (I) or (II) and the ionic compound represented by the general formula $[A]^+[B]^-$ in combination.

The structures of the metallocene complexes represented by the general formulae (I) and (II) and the half metallocene cation complex represented by the general formula (III) are preferably determined by X-ray crystallography.

Further, examples of other component (A-1) include a metallocene-based composite catalyst represented by the following general formula (V):

$$R_aMX_bQY_b \ldots \qquad (V)$$

(where each R independently represents an unsubstituted or substituted indenyl where R is coordinated to M, M represents a lanthanoid element, scandium, or yttrium, each X independently represents a monovalent hydrocarbon group having 1 to 20 carbon atoms where X is μ-coordinated to M and Q, Q represents an element of group 13 in the periodic table, each Y independently represents a monovalent hydrocarbon group having 1 to 20 carbon atoms or a hydrogen atom where Y is coordinated to Q, and a and b are 2).

Preferred examples of the metallocene-based composite catalyst include a metallocene-based composite catalyst represented by the following general formula (VI):

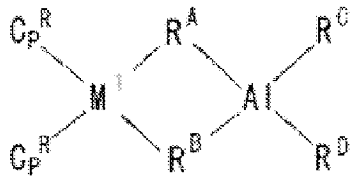

· · · (VI)

(where $M^1$ represents a lanthanoid element, scandium, or yttrium, each $Cp^R$ independently represents an unsubstituted or substituted indenyl, $R^A$ and $R^B$ each independently represent a hydrocarbon group having 1 to 20 carbon atoms where $R^A$ and $R^B$ are μ-coordinated to $M^1$ and Al, and $R^C$ and $R^D$ each independently represent a hydrocarbon group having 1 to 20 carbon atoms or a hydrogen atom).

By using the metallocene-based composite catalyst, a multicomponent copolymer can be produced. By using the metallocene-based composite catalyst, e.g. a catalyst that has been combined with an aluminum catalyst, the amount of alkylaluminum used in the synthesis of the multicomponent copolymer can be reduced or the use of alkylaluminum can be omitted. In the case of using a conventional catalyst system, a large amount of alkylaluminum is required in the synthesis of the multicomponent copolymer. For example, in the case of the conventional catalyst system, alkylaluminum should be used in an amount of 10 molar equivalents or more, with respect to the metal catalyst. In the case of the metallocene-based composite catalyst, on the other hand, an excellent catalytic action is exhibited by adding alkylaluminum in an amount of approximately 5 molar equivalents.

In the metallocene-based composite catalyst, the metal M in the general formula (V) is a lanthanoid element, scandium, or yttrium. Lanthanoid elements include 15 elements with atomic numbers 57 to 71, any of which may be used. Preferred examples of the metal M include samarium Sm, neodymium Nd, praseodymium Pr, gadolinium Gd, cerium Ce, holmium Ho, scandium Sc, and yttrium Y.

In the general formula (V), each R is independently an unsubstituted indenyl or a substituted indenyl where R is coordinated to the metal M. Specific examples of the substituted indenyl include a 1,2,3-trimethylindenyl group, a heptamethylindenyl group, and a 1,2,4,5,6,7-hexamethylindenyl group.

In the general formula (V), Q represents an element of group 13 in the periodic table. Specific examples thereof include boron, aluminum, gallium, indium, and thallium.

In the general formula (V), each X independently represents a monovalent hydrocarbon group having 1 to 20 carbon atoms where X is μ-coordinated to M and Q. Examples of the monovalent hydrocarbon group having 1 to 20 carbon atoms include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group. The μ-coordination means a coordination having a crosslinking structure.

In the general formula (V), each Y independently represents a monovalent hydrocarbon group having 1 to 20 carbon atoms or a hydrogen atom, and Y is coordinated to Q. Examples of the monovalent hydrocarbon group having 1 to 20 carbon atoms include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

In the general formula (VI), the metal $M^1$ is a lanthanoid element, scandium, or yttrium. Lanthanoid elements include 15 elements with atomic numbers 57 to 71, any of which may be used. Preferred examples of the metal $M^1$ include samarium Sm, neodymium Nd, praseodymium Pr, gadolinium Gd, cerium Ce, holmium Ho, scandium Sc, and yttrium Y.

In the general formula (VI), $Cp^R$ is an unsubstituted indenyl or a substituted indenyl. $Cp^R$ having an indenyl ring as a basic skeleton may be represented by $C_9H_{7-X}R_X$ or $C_9H_{11-X}R_X$. X is an integer of 0 to 7 or 0 to 11. Each R is preferably independently a hydrocarbyl group or a metalloid group. The carbon atom number of the hydrocarbyl group is preferably 1 to 20, more preferably 1 to 10, and further preferably 1 to 8. Preferred specific examples of the hydrocarbyl group include a methyl group, an ethyl group, a phenyl group, and a benzyl group. On the other hand, examples of the metalloid in the metalloid group include germyl Ge, stannyl Sn, and silyl Si. The metalloid group preferably has a hydrocarbyl group which is the same as the hydrocarbyl group described above. A specific example of the metalloid group is a trimethylsilyl group.

Specific examples of the substituted indenyl include 2-phenylindenyl and 2-methylindenyl. The two $Cp^R$ in the formula (VI) may be the same as or different from each other.

In the general formula (VI), $R^A$ and $R^B$ each independently represents a monovalent hydrocarbon group having 1 to 20 carbon atoms, and $R^A$ and $R^B$ are μ-coordinated to $M^1$ and Al. Examples of the monovalent hydrocarbon group having 1 to 20 carbon atoms include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group. The μ-coordination means a coordination having a crosslinking structure.

In the general formula (VI), $R^C$ and $R^D$ are each independently a monovalent hydrocarbon group having 1 to 20 carbon atoms or a hydrogen atom. Examples of the monovalent hydrocarbon group having 1 to 20 carbon atoms include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

The metallocene-based composite catalyst can be obtained by, for example, allowing a metallocene complex represented by the following general formula (VII) to react with an organoaluminum compound represented by $AlR^KR^LR^M$ in a solvent:

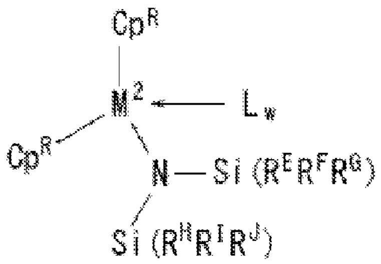

... (VII)

(where $M^2$ represents a lanthanoid element, scandium, or yttrium, each $Cp^R$ independently represents an unsubstituted or substituted indenyl, $R^E$ to $R^J$ each independently represent an alkyl group having 1 to 3 carbon atoms or a hydrogen atom, L represents a neutral Lewis base, and w represents an integer of 0 to 3). The reaction temperature may be set to be approximately room temperature, and thus the metallocene-based composite catalyst can be produced under mild conditions. The reaction time is not limited and may be approximately several hours to several tens of hours. The reaction solvent is not particularly limited, yet it is preferably a solvent that dissolves a raw material and a product. For example, toluene or hexane may be used. The structure of the metallocene-based composite catalyst is preferably determined by $^1$H-NMR or X-ray crystallography.

In the metallocene complex represented by the general formula (VII), $Cp^R$ is an unsubstituted indenyl or a substituted indenyl and has the same definition as $Cp^R$ in the general formula (VI). In the formula (VII), the metal $M^2$ is a lanthanoid element, scandium, or yttrium, and has the same definition as the metal $M^1$ in the formula (VI).

The metallocene complex represented by the general formula (VII) contains a silylamide ligand $[-N(SiR_3)_2]$. Each R group ($R^E$ to $R^J$ groups) contained in the silylamide ligand is independently an alkyl group having 1 to 3 carbon atoms or a hydrogen atom. At least one of $R^E$ to $R^J$ is preferably a hydrogen atom. As a result of at least one of $R^E$ to $R^J$ being a hydrogen atom, the synthesis of the catalyst is easier. The alkyl group is preferably a methyl group.

The metallocene complex represented by the general formula (VII) further contains zero to three, preferably zero or one neutral Lewis base L. Examples of the neutral Lewis base L include tetrahydrofuran, diethyl ether, dimethylaniline, trimethylphosphine, lithium chloride, neutral olefins, and neutral diolefins. In the case where the complex includes a plurality of neutral Lewis bases L, the neutral Lewis bases L may be the same or different.

The metallocene complex represented by the general formula (VII) may be present as a monomer or as a dimer or a multimer.

On the other hand, the organoaluminum compound used in the production of the metallocene-based composite catalyst is represented by $AlR^KR^LR^M$, where $R^K$ and $R^Y$ are each independently a monovalent hydrocarbon group having 1 to 20 carbon atoms or a hydrogen atom, and $R^M$ is a monovalent hydrocarbon group having 1 to 20 carbon atoms, where $R^M$ may be the same as or different from $R^K$ or $R^L$. Examples of the monovalent hydrocarbon group having 1 to 20 carbon atoms include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

Specific examples of the organoaluminum compound include trimethyl aluminum, triethyl aluminum, tri-n-propylaluminum, triisopropylaluminum, tri-n-butyl aluminum, triisobutyl aluminum, tri-t-butyl aluminum, tripentylaluminum, trihexylaluminum, tricyclohexylaluminum, and trioctylaluminum; diethyl aluminum hydride, di-n-propylaluminum hydride, di-n-butyl aluminum hydride, diisobutyl aluminum hydride, dihexylaluminum hydride, diisohexylaluminum hydride, dioctylaluminum hydride, and diisooctylaluminum hydride; and ethyl aluminum dihydride, n-propylaluminum

dihydride, and isobutyl aluminum dihydride, among which triethyl aluminum, triisobutyl aluminum, diethyl aluminum hydride, and diisobutyl aluminum hydride are preferred. These organoaluminum compounds may be used alone or in combination of two or more. The organoaluminum compound used in the production of the metallocene-based composite catalyst is in an amount of preferably 1 time to 50 times mol, and more preferably approximately 10 times mol, with respect to the metallocene complex.

(A-2) the rare earth element compound or the reaction product having no rare earth element-carbon bond

The component (A-2) is a rare earth element compound or a reaction product of the rare earth element compound and a Lewis base. The rare earth element compound or the reaction product of the rare earth element compound and the Lewis base does not have a bond of rare earth element and carbon. In the case where the rare earth element compound or the reaction product does not have a rare earth element-carbon bond, the compound is stable and easy to handle. As used herein, the rare earth element compound is a compound containing a rare earth element (M), namely, a lanthanoid element composed of any of the elements with atomic numbers 57 to 71 in the periodic table, or scandium or yttrium.

Specific examples of the lanthanoid element include lanthanum, cerium, praseodymium, neodymium, promethium, samarium, europium, gadolinium, terbium, dysprosium, holmium, erbium, thulium, ytterbium, and lutetium. These components may be used alone or in combination of two or more.

In the rare earth element compound, the rare earth metal is preferably a divalent or trivalent salt or a complex compound, and more preferably a rare earth element compound containing one or more ligands selected from a hydrogen atom, a halogen atom, and an organic compound residue. Further, the rare earth element compound or the reaction product of the rare earth element compound and the Lewis base is preferably represented by the following general formula (VIII) or (IX):

$$M^{11}X^{11}{}_2 \cdot L^{11}w \ldots \qquad (VIII)$$

$$M^{11}X^{11}{}_3 \cdot L^{1l}w \ldots \qquad (IX)$$

(where in each formula, M11 represents a lanthanoid element, scandium, or yttrium, each $X^{11}$ independently represents a hydrogen atom, a halogen atom, an alkoxy group, a thiolate group, an amino group, a silyl group, an aldehyde residue, a ketone residue, a carboxylic acid residue, a thiocarboxylic acid residue, or a phosphorous compound residue, $L^{11}$ represents a Lewis base, and w represents 0 to 3).

Examples of the group (ligand) binding to the rare earth element of the rare earth element compound include a hydrogen atom, a halogen atom, an alkoxy group (a group obtained by removing hydrogen from a hydroxyl group of alcohol, which forms a metal alkoxide), a thiolate group (a group obtained by removing hydrogen from a thiol group of a thiol compound, which forms a metal thiolate), an amino group (a group obtained by removing one hydrogen atom binding to a nitrogen atom of ammonia, a primary amine, or a secondary amine, which forms a metal amide), a silyl group, an aldehyde residue, a ketone residue, a carboxylic acid residue, a thiocarboxylic acid residue, and a phosphorus compound residue.

Specific examples of the group (ligand) include a hydrogen atom; aliphatic alkoxy groups such as a methoxy group, an ethoxy group, a propoxy group, an n-butoxy group, an isobutoxy group, a sec-butoxy group, and a tert-butoxy group; a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group; aliphatic thiolate groups such as a thiomethoxy group, a thioethoxy group, a thiopropoxy group, a thio-n-butoxy group, a thioisobutoxy group, a thio-sec-butoxy group, and a thio-tert-butoxy group; arylthiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group; aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; bistrialkylsilylamino groups such as a bistrimethylsilylamino group; silyl groups such as a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group; and halogen atoms such as a fluorine atom, a chlorine atom, a bromine atom, and an iodine atom.

**In** addition, examples of the group (ligand) include residues of aldehydes such as salicylaldehyde, 2-hydroxy-1-naphthaldehyde, and 2-hydroxy-3-naphthaldehyde; residues of hydroxyphenones such as 2'-hydroxyacetophenone, 2'-hydroxybutyrophenone, and 2'-hydroxypropiophenone; residues of ketones (particularly residues of diketones) such as acetylacetone, benzoylacetone, propionylacetone, isobutylacetone, valerylacetone, and ethylacetylacetone; residues of carboxylic acids such as isovaleric acid, capric acid, octanoic acid, lauric acid, myristic acid, palmitic acid, stearic acid,

isostearic acid, oleic acid, linoleic acid, cyclopentanecarboxylic acid, naphthenic acid, ethylhexanoic acid, pivalic acid, Versatic acid [product name, manufactured by Shell Chemicals Japan, a synthetic acid formed from a mixture of C10 monocarboxylic acid isomers], phenylacetic acid, benzoic acid, 2-naphthoic acid, maleic acid, and succinic acid; residues of thiocarboxylic acids such as hexanethioic acid, 2,2-dimethylbutanethioic acid, decanethioic acid, and thiobenzoic acid; residues of phosphoric acid esters such as dibutyl phosphate, dipentyl phosphate, dihexyl phosphate, diheptyl phosphate, dioctyl phosphate, bis(2-ethylhexyl) phosphate, bis(1-methylheptyl) phosphate, dilauryl phosphate, dioleyl phosphate, diphenyl phosphate, bis(p-nonylphenyl) phosphate, bis(polyethylene glycol-p-nonylphenyl) phosphate, (butyl)(2-ethylhexyl) phosphate, (1-methylheptyl)(2-ethylhexyl) phosphate, and (2-ethylhexyl)(p-nonylphenyl) phosphate; residues of phosphonic acid esters such as monobutyl 2-ethylhexylphosphonate, mono-2-ethylhexyl 2-ethylhexylphosphonate, mono-2-ethylhexyl phenylphosphonate, mono-p-nonylphenyl 2-ethylhexylphosphonate, mono-2-ethylhexyl phosphonate, mono-1-methylheptyl phosphonate, and mono-p-nonylphenyl phosphonate; and residues of phosphinic acids such as dibutylphosphinic acid, bis(2-ethylhexyl)phosphinic acid, bis(1-methylheptyl)phosphinic acid, dilaurylphosphinic acid, dioleylphosphinic acid, diphenylphosphinic acid, bis(p-nonylphenyl)phosphinic acid, butyl (2-ethylhexyl)phosphinic acid, (2-ethylhexyl)(1-methylheptyl)phosphinic acid, (2-ethylhexyl)(p-nonylphenyl)phosphinic acid, butylphosphinic acid, 2-ethylhexylphosphinic acid, 1-methylheptylphosphinic acid, oleylphosphinic acid, laurylphosphinic acid, phenylphosphinic acid, and p-nonylphenylphosphinic acid.

These groups (ligands) may be used alone or in combination of two or more.

Examples of the Lewis base to be reacted with the rare earth element compound include tetrahydrofuran, diethyl ether, dimethylaniline, trimethylphosphine, lithium chloride, neutral olefins, and neutral diolefins. In the case where the rare earth element compound reacts with a plurality of Lewis bases (in the case where w is 2 or 3 in the general formulae (VIII) and (IX)), the Lewis bases $L^{11}$ may be the same or different.

The rare earth element compound is preferably a compound represented by the following general formula (X):

$$M\text{-}(AQ^1)(AQ^2)(AQ^3) \ldots \qquad (X)$$

(where M is scandium, yttrium, or a lanthanoid element; $AQ^1$, $AQ^2$, and $AQ^3$ are functional groups which may be the same or different; A is nitrogen, oxygen, or sulfur; and the rare earth element compound has at least one M-A bond). Specific examples of the lanthanoid element include lanthanum, cerium, praseodymium, neodymium, promethium, samarium, europium, gadolinium, terbium, dysprosium, holmium, erbium, thulium, ytterbium, and lutetium. The compound is a component capable of improving the catalytic activity in the reaction system, shortening the reaction time, and increasing the reaction temperature.

M in the general formula (X) is particularly preferably gadolinium, from the viewpoint of improving the catalytic activity and the reaction controllability.

In the case where A in the general formula (X) is nitrogen, the functional groups represented by $AQ^1$, $AQ^2$, and $AQ^3$ (i.e. $NQ^1$, $NQ^2$, and $NQ^3$) may be, for example, an amino group. In this case, it has three M-N bonds.

Examples of the amino group include aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; and bistrialkylsilylamino groups such as a bistrimethylsilylamino group. In particular, a bistrimethyllsilylamino group is preferred from the viewpoint of the solubility in an aliphatic hydrocarbon and an aromatic hydrocarbon. These amino groups may be used alone or in combination of two or more.

With this structure, the component (A-2) can be a compound having three M-N bonds, the bonds are chemically equivalent to one another, and the structure of the compound is stable. Consequently, it is easy to handle.

Moreover, with this structure, the catalytic activity in the reaction system can be further improved. Consequently, the reaction time can be further shortened, and the reaction temperature can be further increased.

In the case where A in the general formula (X) is oxygen, the rare earth element-containing compound represented by the general formula (X) (that is, $M\text{-}(OQ^1)(OQ^2)(OQ^3)$) is not particularly limited, and examples thereof include a rare earth alcoholate represented by the following general formula (XI):

$$(RO)_3M \ldots \qquad (XI),$$

and a rare earth carboxylate represented by the following general formula (XII):

$$(R\text{-}CO_2)_3M \ldots \qquad (XII).$$

In the general formulae (XI) and (XII), R may be the same or different and is an alkyl group having 1 to 10 carbon atoms.

Because the component (A-2) preferably does not have a bond between rare earth element and carbon, the

compound (XI) or the compound (XII) described above can be suitably used.

In the case where A in the general formula (X) is sulfur, the rare earth element-containing compound represented by the general formula (X) (that is, $M-(SQ^1)(SQ^2)(SQ^3)$) is not particularly limited, and examples thereof include a rare earth alkylthiolate represented by the following general formula (XIII):

$$(RS)_3M \ldots \qquad (XIII),$$

and a compound represented by the following general formula (XIV):

$$(R-CS_2)_3M \ldots \qquad (XIV).$$

In the general formulae (XIII) and (XIV), R may be the same or different and is an alkyl group having 1 to 10 carbon atoms.

Because the component (A-2) preferably does not have a bond between rare earth element and carbon, the compound (XIII) or the compound (XIV) described above can be suitably used.

(B): organometallic compound

The component (B) is an organometallic compound represented by the following general formula (XV):

$$YR^1{}_aR^2{}_bR^3{}_c \ldots \qquad (XV)$$

(where Y is a metal selected from groups 1, 2, 12, and 13 in the periodic table, $R^1$ and $R^2$ are a monovalent hydrocarbon group having 1 to 10 carbon atoms or a hydrogen atom, $R^3$ is a monovalent hydrocarbon group having 1 to 10 carbon atoms, $R^1$, $R^2$, and $R^3$ may be the same with or different from each other, a is 1 and b and c are 0 in the case where Y is a metal selected from group 1 in the periodic table, a and b are 1 and c is 0 in the case where Y is a metal selected from groups 2 and 12 in the periodic table, and a, b, and c are 1 in the case where Y is a metal selected from group 13 in the periodic table). The component (B) is preferably an organoaluminum compound represented by the following general formula (XVI):

$$AlR^1R^2R^3 \ldots \qquad (XVI)$$

(where $R^1$ and $R^2$ are a monovalent hydrocarbon group having 1 to 10 carbon atoms or a hydrogen atom, $R^3$ is a monovalent hydrocarbon group having 1 to 10 carbon atoms, and $R^1$, $R^2$, and $R^3$ may be the same with or different from each other).

Examples of the organoaluminum compound of the general formula (XVI) include trimethyl aluminum, triethyl aluminum, tri-n-propylaluminum, triisopropylaluminum, tri-n-butyl aluminum, triisobutyl aluminum, tri-t-butyl aluminum, tripentylaluminum, trihexylaluminum, tricyclohexylaluminum, and trioctylaluminum; diethyl aluminum hydride, di-n-propylaluminum hydride, di-n-butyl aluminum hydride, diisobutyl aluminum hydride, dihexylaluminum hydride, diisohexylaluminum hydride, dioctylaluminum hydride, and diisooctylaluminum hydride; and ethyl aluminum dihydride, n-propylaluminum dihydride, and isobutyl aluminum dihydride, among which triethyl aluminum, triisobutyl aluminum, diethyl aluminum hydride, and diisobutyl aluminum hydride are preferred.

The component (B) may be used alone or in combination of two or more. When the component (B) is used in combination with the component (A) described above, the amount of the component (B) used is preferably 1 time to 50 times mol and more preferably approximately 10 times mol, with respect to the component (A).

(C) aluminoxane

The component (C) is a compound obtained by causing an organoaluminum compound to come into contact with a condensation agent.

As a result of using the component (C), the catalytic activity in the polymerization reaction system can be further improved. Consequently, the reaction time can be further shortened, and the reaction temperature can be further increased.

Examples of the organoaluminum compound include trialkylaluminum such as trimethyl aluminum, triethyl aluminum, and triisobutyl aluminum, and mixtures thereof, and trimethyllaluminum and a mixture of trimethyllaluminum and tributyl aluminum are particularly preferred.

On the other hand, examples of the condensation agent include water.

Examples of the component (C) include aluminoxane represented by the following formula (XVII):

$$-(Al(R^7)O)_n- \ ... \qquad (XVII)$$

(where $R^7$ is a hydrocarbon group having 1 to 10 carbon atoms, part of the hydrocarbon group may be substituted by halogen and/or an alkoxy group, $R^7$ may be the same or different among repeating units, and n is 5 or more).

The molecular structure of the aluminoxane may be linear or cyclic.

In the formula (XVII), n is preferably 10 or more.

Examples of the hydrocarbon group of $R^7$ in the formula (XVII) include a methyl group, an ethyl group, a propyl group, and an isobutyl group, and a methyl group is particularly preferred. The hydrocarbon group may be used alone or in combination of two or more. The hydrocarbon group of $R^7$ in the formula (XVII) is preferably a combination of a methyl group and an isobutyl group.

The aluminoxane preferably has high solubility in an aliphatic hydrocarbon and preferably has low solubility in an aromatic hydrocarbon. For example, aluminoxane commercially available as a hexane solution is preferred.

Examples of the aliphatic hydrocarbon include hexane and cyclohexane.

The component (C) may be modified aluminoxane (hereafter, also referred to as "TMAO") represented by the following formula (XVIII):

$$-(Al(CH_3)_x(i\text{-}C_4H_9)_yO)_m- \ ... \qquad (XVIII)$$

(where x + y is 1, and m is 5 or more). An example of TMAO is product name "TMAO341" manufactured by Tosoh Finechem Corporation.

The component (C) may be modified aluminoxane (hereafter, also referred to as "MMAO") represented by the following formula (XIX):

$$-(Al(CH_3)_{0.7}(i\text{-}C_4H_9)_{0.3}O)_k- \ ... \qquad (XIX)$$

(where k is 5 or more). An example of MMAO is product name "MMAO-3A" manufactured by Tosoh Finechem Corporation.

The component (C) may be modified aluminoxane (hereafter, also referred to as "PMAO") represented by the following formula (XX):

$$-[(CH_3)AlO]_i- \ ... \qquad (XX)$$

(where i is 5 or more). An example of PMAO is product name "TMAO-211" manufactured by Tosoh Finechem Corporation.

From the viewpoint of improving the effect of improving the catalytic activity, the component (C) is preferably MMAO or TMAO among the aforementioned MMAO, TMAO, and PMAO. Particularly from the viewpoint of further improving the effect of improving the catalytic activity, the component (C) is more preferably TMAO.

The component (C) may be used alone or in combination of two or more. Further, from the viewpoint of improving the catalytic activity, when the component (C) is used in combination with the component (A) described above, the aluminum in the component (C) is preferably 10 mol or more and more preferably 100 mol or more with respect to 1 mol of the rare earth element in the component (A), and the aluminum in the component (C) is preferably 1000 mol or less and more preferably 800 mol or less with respect to 1 mol of the rare earth element in the component (A).

(D) ionic compound

The component (D) contains a non-coordinating anion and a cation. When the component (D) is used in combination with the component (A) described above, examples of the component (D) include an ionic compound capable of reacting with the component (A) to form a cationic transition metal compound.

Examples of the non-coordinating anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl) borate, tetrakis(tetrafluoromethylphenyl)borate, tetra(tolyl)borate, tetra(xylyl)borate, (triphenyl,pentafluorophenyl)borate, [tris(pentafluorophenyl),phenyl]borate, and tridecahydride-7,8-dicarbaundecaborate, among which tetrakis(pentafluorophenyl)borate is preferred.

On the other hand, examples of the cation include a carbonium cation, an oxonium cation, an amine cation, a phosphonium cation, a cycloheptatrienyl cation, and a ferrocenium cation having a transition metal. Specific examples of the carbonium cation include trisubstituted carbonium cations such as a triphenylcarbonium cation and a tri(substituted phenyl)carbonium cation. Specific examples of the tri(substituted phenyl)carbonyl cation include a tri(methylphenyl) carbonium cation and a tri(dimethylphenyl)carbonium cation. Examples of the amine cation include an ammonium cation. Specific examples of the ammonium cation include trialkylammonium cations such as a trimethylammonium cation, a

triethylammonium cation, a tripropylammonium cation, and a tributylammonium cation (e.g. a tri(n-butyl)ammonium cation); N,N-dialkylanilinium cations such as a N,N-dimethylanilinium cation, a N,N-diethylanilinium cation, and a N,N-2,4,6-pentamethylanilinium cation; and dialkylammonium cations such as a diisopropylammonium cation and a dicyclohexylammonium cation. Specific examples of the phosphonium cation include triarylphosphonium cations such as a triphenylphosphonium cation, a tri(methylphenyl)phosphonium cation, and a tri(dimethylphenyl)phosphonium cation. Among these cations, a N,N-dialkylanilinium cation or a carbonium cation is preferred, and a N,N-dialkylanilinium cation is particularly preferred.

Therefore, the ionic compound (component (D)) is preferably a compound obtained by combining a non-coordinating anion and a cation respectively selected from the aforementioned non-coordinating anions and cations. Specifically, N,N-dimethylanilinium tetrakis(pentafluorophenyl)borate, triphenylcarbonium tetrakis(pentafluorophenyl) borate, and the like are preferred.

The component (D) may be used alone or in combination of two or more. When the component (D) is used in combination with the component (A) described above, the amount of the component (D) used is preferably 0.1 times to 10 times mol and more preferably approximately 1 time mol, with respect to the component (A).

(E) halogen compound

The component (E) contains at least one selected from a halogen-containing compound which is a Lewis acid (hereafter, also referred to as "component (E-1)"), a complex compound of a metal halide and a Lewis base (hereafter, also referred to as "component (E-2)"), and an organic compound containing active halogen (hereafter, also referred to as "component (E-3)"). For example, the component (E) can react with the component (A), i.e. the rare earth element compound or the reaction product of the rare earth element compound and a Lewis base to obtain a cationic transition metal compound, a halogenated transition metal compound, or a compound in which electrons are insufficient at the transition metal center.

The component (E-1) may be, for example, a halogen compound containing an element of group 3, group 4, group 5, group 6, group 8, group 13, group 14, or group 15 in the periodic table. Preferred examples thereof include an aluminum halide or an organometallic halide. In addition, the halogen element is preferably chlorine or bromine.

Specific examples of the halogen-containing compound which is a Lewis acid include methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, dibutyltin dichloride, aluminum tribromide, tri(pentafluorophenyl) aluminum, tri(pentafluorophenyl)borate, antimony trichloride, antimony pentachloride, phosphorus trichloride, phosphorus pentachloride, tin tetrachloride, titanium tetrachloride, and tungsten hexachloride. Among these, diethyl aluminum chloride, ethyl aluminum sesquichloride, ethyl aluminum dichloride, diethyl aluminum bromide, ethyl aluminum sesquibromide, and ethyl aluminum dibromide are particularly preferred.

The component (E-1) may be used alone or in combination of two or more.

Examples of the metal halide contained in the component (E-2) include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, and gold bromide. Among these, magnesium chloride, calcium chloride, barium chloride, manganese chloride, zinc chloride, and copper chloride are preferred, and magnesium chloride, manganese chloride, zinc chloride, and copper chloride are particularly preferred.

The Lewis base contained in the component (E-2) is preferably a phosphorus compound, a carbonyl compound, a nitrogen compound, an ether compound, or an alcohol. Specific examples thereof include tributyl phosphate, tri-2-ethylhexyl phosphate, triphenyl phosphate, tricresyl phosphate, triethylphosphine, tributylphosphine, triphenylphosphine, diethylphosphino ethane, diphenylphosphino ethane, acetylacetone, benzoylacetone, propionitrileacetone, valerylacetone, ethyl acetylacetone, methyl acetoacetate, ethyl acetoacetate, phenyl acetoacetate, dimethyl malonate, diethyl malonate, diphenyl malonate, acetic acid, octanoic acid, 2-ethyl-hexanoic acid, oleic acid, stearic acid, benzoic acid, naphthenic acid, versatic acid, triethylamine, N,N-dimethylacetamide, tetrahydrofuran, diphenyl ether, 2-ethyl-hexyl alcohol, oleyl alcohol, stearyl alcohol, phenol, benzyl alcohol, 1-decanol, and lauryl alcohol. Among these, tri-2-ethylhexyl phosphate, tricresyl phosphate, acetylacetone, 2-ethylhexane acid, versatic acid, 2-ethylhexyl alcohol, 1-decanol, and lauryl alcohol are preferred

The Lewis base is brought to reaction at a ratio of 0.01 mol to 30 mol and preferably at a ratio of 0.5 mol to 10 mol, per 1 mol of the metal halide. By using a reaction product with the Lewis base, metal remaining in the polymer can be reduced.

The component (E-2) may be used alone or in combination of two or more.

Examples of the component (E-3) include benzyl chloride.

The component (E) may be used alone or in combination of two or more. When the component (E) is used in combination with the component (A) described above, the amount of the component (E) used is preferably 0 to 5 times mol and more preferably 1 time to 5 times mol, with respect to the component (A).

The cyclopentadiene skeleton-containing compound (component (F)) has a group selected from a cyclopentadienyl group, an indenyl group, and a fluorenyl group. The cyclopentadiene skeleton-containing compound (F) is at least one compound selected from the group consisting of substituted or unsubstituted cyclopentadiene, substituted or unsubstituted indene, and substituted or unsubstituted fluorene. The component (F) may be used alone or in combination of two or more.

Examples of the substituted or unsubstituted cyclopentadiene include cyclopentadiene, pentamethylcyclopentadiene, tetramethylcyclopentadiene, isopropylcyclopentadiene, trimethylsilyl-tetramethylcyclopentadiene, and (1-benzyldimethylsilyl) cyclopenta [l] phenanthrene.

Examples of the substituted or unsubstituted indene include indene, 2-phenyl-1H-indene, 3-benzyl-1H-indene, 3-methyl-2-phenyl-1H-indene, 3-benzyl-2-phenyl-1H-indene, 1-benzyl-1H-indene, 1-methyl-3-dimethylbenzylsilyl-indene, 1,3-bis (t-butyldimethylsilyl) -indene, (1-benzyldimethylsilyl-3-cyclopentyl) indene, and (1-benzyl-3-t-butyldimethylsilyl) indene. From the viewpoint of reducing the molecular weight distribution, 3-benzyl-1H-indene and 1-benzyl-1H-indene are particularly preferred.

Examples of the substituted or unsubstituted fluorene include fluorene, trimethylsilylfluorene, and isopropylfluorene.

In particular, the cyclopentadiene skeleton-containing compound (component (F)) is preferably substituted cyclopentadiene, substituted indene or substituted fluorene, and more preferably substituted indene. In this way, the bulk of the polymerization catalyst is advantageously increased, so that the reaction time can be shortened and the reaction temperature can be increased. In addition, it contains a large number of conjugated electrons, so that the catalytic activity in the reaction system can be further improved.

Examples of the substituent of the substituted cyclopentadiene, the substituted indene, and the substituted fluorene include a hydrocarbyl group and a metalloid group. The carbon atom number of the hydrocarbyl group is preferably 1 to 20, more preferably 1 to 10, and further preferably 1 to 8. Preferred specific examples of the hydrocarbyl group include a methyl group, an ethyl group, a phenyl group, and a benzyl group. On the other hand, examples of the metalloid in the metalloid group include germyl Ge, stannyl Sn, and silyl Si. The metalloid group preferably has a hydrocarbyl group which is the same as the hydrocarbyl group described above. A specific example of the metalloid group is a trimethylsilyl group.

The component (F) may be used alone or in combination of two or more. Further, from the viewpoint of improving the catalytic activity, when the component (F) is used in combination with the component (A) described above, the amount of the component (F) used is preferably more than 0, more preferably 0.5 or more, and particularly preferably 1 or more, and is preferably 3 or less, more preferably 2.5 or less, and particularly preferably 2.2 or less as a molar ratio with respect to the component (A).

It is preferable that the components (A) to (F) described above are combined in various ways and used as a catalyst composition in the polymerization step. Preferred examples of the catalyst composition include the following first catalyst composition and second catalyst composition.

The first catalyst composition contains the component (A-1), the component (B), and the component (D), and preferably further contains, as optional components, at least one of the component (C) and the component (E). When the component (A-1) is a metallocene-based composite catalyst represented by the general formula (V), the component (B) is also an optional component.

The second catalyst composition contains the component (A-2), the component (B), and the component (D), and preferably further contains, as optional components, at least one of the component (C), the component (E), and the component (F). When the second catalyst composition contains the component (F), the catalytic activity is improved.

The coupling step is a step of performing a reaction (coupling reaction) to modify at least part (for example, a terminal end) of a polymer chain of the multicomponent copolymer obtained in the polymerization step.

The coupling step is preferably performed when the polymerization reaction has reached 100 %.

The coupling agent used in the coupling reaction is not particularly limited and may be appropriately selected depending on the intended purpose. Examples thereof include tin-containing compounds such as bis(maleic acid-1-octadecyl)dioctyltin (IV); isocyanate compounds such as 4,4'-diphenylmethane diisocyanate; and alkoxysilane compounds such as glycidylpropyltrimethoxysilane. These coupling agents may be used alone or in combination of two or more.

Among these, bis(maleic acid-1-octadecyl)dioctyltin (IV) is preferred from the viewpoint of reaction efficiency and low gel formation.

In addition, performing the coupling reaction can increase the number-average molecular weight (Mn).

The cleaning step is a step of cleaning the multicomponent copolymer obtained in the polymerization step. The medium used in the cleaning is not particularly limited and may be appropriately selected depending on the intended purpose. Examples thereof include methanol, ethanol, and isopropanol. An acid (such as hydrochloric acid, sulfuric acid, or nitric acid) may be added to these solvents, when using a Lewis acid-derived catalyst as the polymerization catalyst. The amount of the acid added is preferably 15 mol% or less with respect to the solvent. When the amount of the acid exceeds 15 mol%, the acid may remain in the copolymer and adversely affecting the reaction during kneading and vulcanization.

The cleaning step can favorably reduce the catalyst residue in the copolymer.

The content of the multicomponent copolymer (a1) in the rubber component (a) is preferably in a range of 5 mass% to 100 mass%, more preferably in a range of 10 mass% to 100 mass%, and further preferably in a range of 15 mass% to 100 mass%. When the content of the multicomponent copolymer (a1) in the rubber component (a) is 10 mass% or more, the effect of the multicomponent copolymer (a1) is sufficiently exhibited, and the wear resistance of the vulcanized rubber composition is further improved.

The rubber component other than the multicomponent copolymer (a1) in the rubber component (a) is not particularly limited and may be appropriately selected depending on the intended purpose. Examples thereof include natural rubber (NR), isoprene rubber (IR), butadiene rubber (BR), acrylonitrile-butadiene rubber (NBR), chloroprene rubber, ethylene-propylene rubber (EPM), ethylene-propylene-diene rubber (EPDM), polysulfide rubber, silicone rubber, fluororubber, and urethane rubber. These other rubber components may be used alone or in combination of two or more.

The rubber composition preferably contains a void introducing agent (b) from the viewpoint of providing a plurality of voids in the vulcanized rubber composition of the present disclosure. When the rubber composition contains a void introducing agent (b), the vulcanized rubber composition of the present disclosure can more reliably be provided with a plurality of voids with an average diameter of 10 $\mu$m to 300 $\mu$m.

Examples of the void introducing agent (b) include a foaming agent, a hydrophilic short fiber, a metal sulfate, a heat-expandable microcapsule, and a porous cellulose particle. Among these, it is preferable to use a foaming agent from the viewpoint of more reliably adjusting the average diameter of the voids of the vulcanized rubber composition. These void introducing agents (b) may be used alone or in combination of two or more.

With respect to the foaming agent, when the rubber composition is vulcanized, bubbles derived from the foaming agent are formed in the vulcanized rubber composition to provide voids in the vulcanized rubber composition, which can further improve the on-ice performance of a tire.

Examples of the foaming agent include azodicarbonamide (ADCA), dinitrosopentamethylenetetramine (DNPT), dinitrosopentastyrenetetramine, benzenesulfonyl hydrazide derivative, p,p'-oxybisbenzenesulfonyl hydrazide (OBSH), ammonium bicarbonate, sodium bicarbonate, ammonium carbonate, nitrososulfonyl azo compound, N,N'-dimethyl-N,N'-dinitrosophthalamide, toluenesulfonyl hydrazide, p-toluenesulfonyl semicarbazide, and p,p'-oxybisbenzenesulfonyl semicarbazide. Among these foaming agents, dinitrosopentamethylenetetramine (DNPT) is preferred. These foaming agents may be used alone or in combination of two or more.

The blending amount of the foaming agent is not particularly limited, yet it is preferably 0.5 parts by mass to 50 parts by mass, more preferably 0.5 parts by mass to 30 parts by mass, and still more preferably 1 part by mass to 20 parts by mass with respect to 100 parts by mass of the rubber component. When the content of the foaming agent is 0.5 parts by mass or more with respect to 100 parts by mass of the rubber component (a), voids can be sufficiently formed, the on-ice performance of a tire can be further improved, and the strain is increased when receiving an input, which increases the effect of the multicomponent copolymer (a1) described above. As a result, the wear resistance of a tire can be further improved. When the content of the foaming agent is 50 parts by mass or less with respect to 100 parts by mass of the rubber component (a), the foamed rubber thus obtained has sufficient strength. As a result, the wear resistance of a tire can be further improved, and a sufficient footprint area can be secured.

It is preferable to use an auxiliary foaming agent such as urea, zinc stearate, zinc benzenesulfinate, and zinc white, in combination with the foaming agent. These auxiliary foaming agents may be used alone or in combination of two or more. Using the auxiliary foaming agent in combination with the foaming agent facilitates a foaming reaction and enhances the degree of completion of the reaction, thereby suppressing unwanted degradation which would otherwise occur over time.

The blending amount of the auxiliary foaming agent is not particularly limited, yet it is preferably in a range of 1 part by mass to 30 parts by mass with respect to 100 parts by mass of the rubber component.

With respect to the hydrophilic short fiber, gas generated by the foaming agent or the like during the vulcanization of the rubber composition enters the inside of the hydrophilic short fiber and forms a gas bubble (void) having a shape corresponding to the shape of the hydrophilic short fiber, thereby providing predetermined voids in the vulcanized rubber composition. As a result, the on-ice performance of a tire can be further improved. In addition, the wall surfaces of the voids are covered with a resin derived from the hydrophilic short fiber and thus made hydrophilic. Therefore, when a vulcanized rubber composition containing a rubber composition containing the hydrophilic short fiber and the foaming agent is used for a tire, the wall surfaces of the gas bubbles are exposed at a tread surface, which improves an affinity for water and facilitates introduction of water to the gas bubbles. As a result, the tire is imparted with excellent drainage properties, and

the on-ice performance of the tire can be significantly improved.

Examples of a hydrophilic resin used as a raw material of the hydrophilic short fiber include a resin having a hydrophilic group in the molecule. Specifically, it is preferably a resin containing at least one selected from an oxygen atom, a nitrogen atom, and a sulfur atom, and examples thereof include a resin containing at least one substituent selected from the group consisting of -OH, -COOH, -OCOR (R is an alkyl group), $-NH_2$, -NCO, and -SH. Among these substituents, -OH, -COOH, -OCOR, $-NH_2$, and -NCO are preferred. Examples include ethylene-vinyl alcohol copolymer, vinyl alcohol homopolymer, poly(meth)acrylic acid or its ester, polyethylene glycol, carboxyvinyl copolymer, styrene-maleic acid copolymer, polyvinylpyrrolidone, vinylpyrrolidone-vinylacetate copolymer, and mercaptoethanol. Among these, ethylene-vinyl alcohol copolymer, vinyl alcohol homopolymer, and poly(meth)acrylic acid are preferred, and ethylene-vinyl alcohol copolymer is particularly preferred.

The surface of the hydrophilic short fiber may have a coating layer formed of a low-melting point resin having an affinity for the rubber component (a) and preferably having a melting point lower than a vulcanization highest temperature of the rubber composition. Formation of such a coating layer effectively maintains the affinity of the hydrophilic short fiber for water and, at the same time, improves the dispersibility of the short fiber in the rubber component (a) because the affinity between the coating layer and the rubber component (a) is good. Further, the low-melting point resin melts during the vulcanization and turns into a fluid coating layer, which contributes to the adhesion between the rubber component (a) and the hydrophilic short fiber. As a result, a tire imparted with good drainage properties and high durability can be easily realized. The thickness of the coating layer, which may vary depending on the blending amount, the average diameter, and the like of the hydrophilic short fiber, is generally 0.001 μm to 10 μm and preferably 0.001 μm to 5 μm.

The melting point of the low-melting point resin used in the coating layer is preferably lower than the highest temperature in the vulcanization of the rubber composition. The highest temperature in the vulcanization means the highest temperature reached by the rubber composition during the vulcanization of the rubber composition. In the case of in-mold vulcanization, for example, it means the highest temperature reached by the rubber composition in a period from the entry of the rubber composition into a mold to the removal of the rubber composition from the mold for cooling. The vulcanization highest temperature can be measured by, for example, embedding a thermocouple in the rubber composition. The upper limit of the melting point of the low-melting point resin is not particularly limited, yet it is preferably selected in view of the requirements and conditions described above. In general, it is lower than the vulcanization highest temperature of the rubber composition preferably by at least 10 °C and more preferably by at least 20 °C. The industrial vulcanization temperature of a rubber composition is generally around 190 °C at its maximum. For example, when the vulcanization highest temperature is set at the 190 °C, the melting point of the low-melting point resin is generally selected in a range of 190 °C or lower, preferably 180 °C or lower, and more preferably 170 °C or lower.

The low-melting point resin is preferably a polyolefin resin and examples thereof include polyethylene, polypropylene, polybutene, polystyrene, ethylene-propylene copolymer, ethylene-methacrylic acid copolymer, ethylene-ethyl acrylate copolymer, ethylene-propylene-diene ternary copolymer, ethylene-vinyl acetate copolymer, and their ionomer resins.

The content of the hydrophilic short fiber is preferably in a range of 0.1 parts by mass to 100 parts by mass and more preferably in a range of 1 part by mass to 50 parts by mass with respect to 100 parts by mass of the total amount of the rubber component. When the content of the hydrophilic short fiber is within the above ranges, a good balance between on-ice performance and wear resistance can be achieved.

With respect to the metal sulfate, when the vulcanized rubber composition is used for a tire, the metal sulfate dissolves as it comes into contact with snow or ice, thereby forming a plurality of voids on the surface of a tire tread. When the wall surfaces of the formed voids are exposed on the tread surface, the tire is imparted with excellent drainage properties, and the on-ice performance of the tire can be significantly improved.

The metal of the metal sulfate is not particularly limited. However, it is preferably an alkali metal and/or an alkaline earth metal from the viewpoint of reliably dissolving when it comes into contact with an icy and snowy road. Examples thereof include potassium, magnesium, calcium, and barium.

The content of the metal sulfate is preferably in a range of 5 parts by mass to 40 parts by mass and more preferably in a range of 10 parts by mass to 35 parts by mass with respect to 100 parts by mass of the total amount of the rubber component (a). When the content of the metal sulfate is within the above ranges, a good balance between on-ice performance and wear resistance can be achieved.

The heat-expandable microcapsule has a property of being vaporized or expanded by heat. When the vulcanized rubber composition is used for a tire, a plurality of voids can be formed inside the vulcanized rubber composition. When the formed voids are exposed at a tread surface, an affinity for water is improved, and the introduction of water to gas bubbles is facilitated. As a result, the tire is imparted with excellent drainage properties, and the on-ice performance of the tire can be significantly improved.

The heat-expandable microcapsule has a structure in which a heat-expandable substance is encapsulated in a shell material formed of a thermoplastic resin. The shell material of the heat-expandable microcapsule can be formed of a nitrile-based polymer.

Further, the heat-expandable substance encapsulated in the shell material of the microcapsule has a property of being vaporized or expanded by heat, and examples thereof include at least one selected from the group consisting of hydrocarbons such as isoalkane and normal alkane. Examples of the isoalkane include isobutane, isopentane, 2-methylpentane, 2-methylhexane, and 2,2,4-trimethylpentane, and examples of the normal alkane include n-butane, n-propane, n-hexane, n-heptane, and n-octane. These hydrocarbons may be used alone or in combination of two or more. A preferred form of the heat-expandable substance may be one obtained by dissolving a hydrocarbon which is gas at room temperature in a hydrocarbon which is a liquid at room temperature. By using such a mixture of hydrocarbons, it is possible to obtain a sufficient expansive power from low-temperature ranges to high-temperature ranges in the vulcanization molding temperature range (150 °C to 190 °C) of an unvulcanized tire.

Examples of such a heat-expandable microcapsule include the product name "EXPANCEL 091DU-80" or "EXPANCEL 092DU-120" manufactured by Expancel, Sweden, and the product name "Matsumoto Microsphere F-85D" or "Matsumoto Microsphere F-100D" manufactured by Matsumoto Yushi-Seiyaku Co., Ltd.

The content of the heat-expandable microcapsule is preferably in a range of 0.5 parts by mass to 20 parts by mass with respect to 100 parts by mass of the total amount of the rubber component. When the content of the heat-expandable microcapsule is within the above ranges, a good balance between on-ice performance and wear resistance can be achieved.

The porous cellulose particle has voids inside. When it is contained in the vulcanized rubber composition, a plurality of voids can be provided in the vulcanized rubber composition. Therefore, when the formed voids are exposed at a tread surface, an affinity for water is improved, and the introduction of water to the voids can be facilitated. As a result, the tire is imparted with excellent drainage properties, and the on-ice performance of the tire can be significantly improved.

As used herein, the porous cellulose particle refers to a cellulose particle having a porous structure with a void fraction of 75 % to 95 %. When the void fraction of the porous cellulose particle is 75 % or more, the effect of improving the on-ice performance is excellent, and when the void fraction is 95 % or less, the strength of the particle can be increased. The void fraction is more preferably 80 % to 90 %.

The void fraction of the porous cellulose particle can be obtained with the following formula, by measuring the volume of a sample (that is, the porous cellulose particle) having a certain mass with a graduated cylinder and determining the bulk specific gravity.

$$\text{Void fraction [\%]} = \{1 - (\text{bulk specific gravity of sample [g/ml]})/(\text{true specific gravity of sample [g/ml]})\} \times 100$$

The true specific gravity of cellulose is 1.5.

The particle size of the porous cellulose particle is not particularly limited. However, from the viewpoint of wear resistance, particles having an average particle size of 1000 μm or less are suitably used. The lower limit of the average particle size is not particularly limited, yet it is preferably 5 μm or more. The average particle size is more preferably 100 μm to 800 μm and still more preferably 200 μm to 800 μm.

The porous cellulose particle is preferably a spherical particle where a ratio of major axis/minor axis is 1 to 2. By using particles having such a spherical structure, it is possible to improve the dispersibility in the rubber composition and contribute to the improvement of on-ice performance and the maintenance of wear resistance. The ratio of major axis/minor axis is more preferably 1.0 to 1.5.

The average particle size and the ratio of major axis/minor axis of the porous cellulose particle can be obtained from, for example, an observation image of the porous cellulose particle under a microscope. With the observation image, the major axis and the minor axis of a particle (in the case where the major axis and the minor axis are the same, a length in a certain axial direction and a length in an axial direction orthogonal to the certain axial direction) are measured for 100 particles, and the average value is calculated to obtain the average particle size. Additionally, the ratio of major axis/minor axis can be obtained by dividing the major axis with the minor axis and averaging the results.

Preferred examples of such a porous cellulose particle include the commercially available "Viscopearl" provided by Rengo Co., Ltd. and those described in JP 2001-323095 A and JP 2004-115284 A.

The content of the porous cellulose particle is preferably in a range of 0.3 parts by mass to 20 parts by mass with respect to 100 parts by mass of the rubber component (a). When the content is 0.3 parts by mass or more, the effect of improving the on-ice performance can be enhanced. When the content is 20 parts by mass or less, it is possible to prevent the rubber hardness from excessively increasing and to suppress the deterioration of wear resistance. The content of the porous cellulose particle is more preferably 1 part by mass to 15 parts by mass and still more preferably 3 parts by mass to 15 parts by mass.

The rubber composition preferably further contains a softener (c). When the rubber composition contains a resin component (c), the operability of the rubber composition is further improved. In addition, when the rubber composition contains a combination of the multicomponent copolymer (a1) and the resin component (c), the high wear resistance derived from the multicomponent copolymer (a1) is maintained, and it is possible to provide a rubber composition having

excellent tackiness when adhering to other members during the molding a tire or the like, which improves the productivity of the tire or the like.

Various natural resins and synthetic resins can be used as the resin component (c). Preferred specific examples thereof include a rosin-based resin, a terpene-based resin, a petroleum-based resin, a phenol-based resin, a coal-based resin, and a xylene-based resin. These resin components (c) may be used alone or in combination of two or more.

For the natural resin, examples of the rosin-based resin include gum rosin, tall oil rosin, wood rosin, hydrogenated rosin, disproportionated rosin, polymerized rosin, and glycerin and pentaerythritol esters of modified rosins.

In addition, for the natural resin, examples of the terpene-based resin include $\alpha$-pinene-based, $\beta$-pinene-based and dipentene-based terpene resins, an aromatic modified terpene resin, a terpene phenol resin, and a hydrogenated terpene resin.

Among these natural resins, polymerized rosin, a terpene phenol resin, and a hydrogenated terpene resin are preferred from the viewpoint of the wear resistance of the vulcanized rubber composition.

For the synthetic resin, the petroleum-based resin is obtained by, for example, thermally decomposing naphtha in the petrochemical industry and polymerizing decomposed oil fractions containing unsaturated hydrocarbons such as olefins and diolefins by-produced together with petrochemical materials such as ethylene and propylene in the form of a mixture with a Friedel-Crafts catalyst. Examples of the petroleum-based resin include an aliphatic petroleum resin obtained by (co)polymerization of a $C_5$ fraction obtained by thermal decomposition of naphtha (hereinafter, may be referred to as "$C_5$-based resin"), an aromatic petroleum resin obtained by (co)polymerization of a $C_9$ fraction obtained by thermal decomposition of naphtha (hereinafter, may be referred to as "$C_9$-based resin"), a copolymerized petroleum resin obtained by copolymerization of the $C_5$ fraction and the $C_9$ fraction (hereinafter, may be referred to as "$C_5$-$C_9$-based resin"), alicyclic compound-based petroleum resins such as hydrogenated ones and dicyclopentadiene-based ones, and styrene, substituted styrene, or styrene-based resins such as a copolymer of styrene and other monomers.

The $C_5$ fraction obtained by thermal decomposition of naphtha usually contains olefin-based hydrocarbons such as 1-pentene, 2-pentene, 2-methyl-1-butene, 2-methyl-2-butene, and 3-methyl-1-butene, and diolefin-based hydrocarbons such as 2-methyl-1,3-butadiene, 1,2-pentadiene, 1,3-pentadiene, and 3-methyl-1,2-butadiene. The aromatic petroleum resin obtained by (co)polymerization of the $C_9$ fraction is a resin obtained by polymerizing an aromatic compound having 9 carbon atoms where vinyltoluene and indene are main monomers. Specific examples of the $C_9$ fraction obtained by thermal decomposition of naphtha include homologues of styrene such as $\alpha$-methylstyrene, $\beta$-methylstyrene, and $\gamma$-methylstyrene, and homologues of indene such as indene and coumarone. Examples of commercial product thereof include PETROSIN manufactured by MITSUI SEKIYU KAGAKU Co., Ltd., PETRITE manufactured by MIKUNI KAGAKU Co., Ltd., NEOPOLYMER manufactured by NIPPON SEKIYU KAGAKU Co., Ltd., and PETCOAL manufactured by TOYO SODA Co., Ltd.

In the present disclosure, a modified petroleum resin obtained by modifying a petroleum resin containing the $C_9$ fraction is suitably used from the viewpoint of operability. Examples of the modified petroleum resin include a $C_9$-based petroleum resin modified with an unsaturated alicyclic compound, a $C_9$-based petroleum resin modified with a compound having a hydroxyl group, and a $C_9$-based petroleum resin modified with an unsaturated carboxylic acid compound.

Preferred examples of the unsaturated alicyclic compound include cyclopentadiene and methylcyclopentadiene. Further, the unsaturated alicyclic compound is preferably a Diels-Alder reaction product of alkylcyclopentadiene. Examples of the Diels-Alder reaction product of alkylcyclopentadiene include dicyclopentadiene, cyclopentadiene/-methylcyclopentadiene codimer, and tricyclopentadiene. The unsaturated alicyclic compound is particularly preferably dicyclopentadiene. A $C_9$-based petroleum resin modified with dicyclopentadiene can be obtained by, for example, thermal polymerization in the presence of both dicyclopentadiene and the $C_9$ fraction. Examples of the $C_9$-based petroleum resin modified with dicyclopentadiene include NEOPOLYMER-130S (manufactured by ENEOS Holdings, Inc.).

Examples of the compound having a hydroxyl group include an alcohol compound and a phenol compound. Specific examples of the alcohol compound include alcohol compounds having a double bond such as allyl alcohol and 2-butene-1,4-diol. The phenol compound may be alkylphenols such as phenol, cresol, xylenol, p-tert-butylphenol, p-octylphenol, and p-nonylphenol. These compounds having a hydroxyl group may be used alone or in combination of two or more. A $C_9$-based petroleum resin having a hydroxyl group can be produced with a method of thermally polymerizing a (meth) acrylic acid alkyl ester or the like together with a petroleum fraction to introduce an ester group into a petroleum resin and then reducing the ester group, or a method of leaving or introducing a double bond into a petroleum resin and then hydrating the double bond. Although the $C_9$-based petroleum resin having a hydroxyl group may be obtained with the aforementioned various methods, it is preferable to use a petroleum resin modified with phenol or the like from the viewpoint of performance and production. The petroleum resin modified with phenol is obtained by cationic polymerization of the $C_9$ fraction in the presence of phenol, which is easy to modify and inexpensive. Examples of the $C_9$-based petroleum resin modified with phenol include NEOPOLYMER-E-130 (manufactured by ENEOS Holdings, Inc.).

The $C_9$-based petroleum resin modified with an unsaturated carboxylic acid compound can be obtained by modifying a $C_9$-based petroleum resin with an ethylenically unsaturated carboxylic acid. Typical examples of the ethylenically unsaturated carboxylic aid include maleic acid(anhydride), fumaric acid, itaconic acid, tetrahydro-phthalic

acid(anhydride), (meth)acrylic acid, and citraconic acid. The $C_9$-based petroleum resin modified with an unsaturated carboxylic acid can be obtained by thermal polymerization of the $C_9$-based petroleum resin and the ethylenically unsaturated carboxylic acid. In the present disclosure, a $C_9$-based petroleum resin modified with a maleic acid is preferred. Examples of the $C_9$-based petroleum resin modified with an unsaturated carboxylic acid include NEOPOLYMER-160 (manufactured by ENEOS Holdings, Inc.).

Further, a copolymer resin of a C5 fraction and a C9 fraction obtained by thermal decomposition of naphtha can be advantageously used. The C9 fraction is not particularly limited, yet it is preferably a C9 fraction obtained by thermal decomposition of naphtha. Specific examples thereof include TS30, TS30-DL, TS35 and TS35-DL of the Struktol series manufactured by SCHILL & SEILACHER.

For the synthetic resin, examples of the phenol-based resin include an alkylphenol-formaldehyde-based resin and its rosin-modified product, an alkylphenol-acetylene-based resin, a modified alkylphenol resin, and a terpene-phenol resin. Specific examples thereof include HITANOL 1502 (manufactured by Hitachi Chemical Company, Ltd.) which is a novolak-type alkylphenol resin and KORESIN (manufactured by BASF) which is a p-tert-butylphenol-acetylene resin.

For the synthetic resin, examples of the coal-based resin include a coumarone-indene resin. For the synthetic resin, examples of the xylene-based resin include a xylene-formaldehyde resin. In addition, others such as polybutene can also be used as the resin component. Among these synthetic resins, a copolymer resin of a $C_5$ fraction and a $C_9$ fraction, an aromatic petroleum resin obtained by (co)polymerization of a $C_9$ fraction, a phenol-based resin, and a coumarone-indene resin are preferred from the viewpoint of the wear resistance of the blended rubber composition.

The SP value of the resin component (c) is preferably 4 or less and more preferably 3 or less. When the SP value of the resin component (c) is 4 or less, it is possible to prevent local resin component (c), which acts as fracture nuclei, in the rubber composition, thereby further improving the wear resistance of the vulcanized rubber composition. The lower limit of the SP value of the resin component (c) is not particularly limited, yet it is preferably 0.01 or more.

As used herein, the SP value of the resin component (c) means a solubility parameter calculated using the numerical formula of Hansen. More specifically, it means a numerical value calculated from the dipole interaction energy between molecules and the energy produced by hydrogen bonding among the three parameters of Hansen.

The weight-average molecular weight (Mw) of the resin component (c) is preferably 2000 or less and more preferably 1500 or less. When the weight-average molecular weight (Mw) of the resin component (c) is 2000 or less, it is possible to prevent local resin component (c), which acts as fracture nuclei, in the rubber composition, thereby further improving the wear resistance of the rubber composition. The lower limit of the weight-average molecular weight (Mw) of the resin component (c) is not particularly limited, yet it is preferably 400 or more.

As used herein, the weight-average molecular weight (Mw) of the resin component (c) is a polystyrene-equivalent value measured by gel permeation chromatography (GPC).

The resin component (c) is preferably a resin having a softening point of 200 °C or lower (measurement method: ASTM E28-58-T), where the softening point is more preferably in a range of 80 °C to 150 °C and further preferably in a range of 90 °C to 120 °C. When the softening point is 200 °C or lower, the temperature dependence of hysteresis loss properties is small, and the operability is further improved.

The content of the resin component (c) is preferably 5 parts by mass to 150 parts by mass, more preferably 5 parts by mass to 100 parts by mass, still more preferably 10 parts by mass to 80 parts by mass, and particularly preferably 10 parts by mass to 50 parts by mass, with respect to 100 parts by mass of the rubber component (a). When the content of the resin component (c) is 5 parts by mass or more with respect to 100 parts by mass of the rubber component (a), the tackiness of the rubber composition and the wear resistance of the vulcanized rubber composition are further improved. When the content is 150 parts by mass or less, the operability of the rubber composition can be maintained well.

The rubber composition preferably further contains a softener (d). This is because containing a softener (d) in the rubber composition improves the operability of the rubber composition.

Examples of the softener include mineral oil derived from mineral, aromatic oil, paraffin-based oil and naphthene-based oil derived from petroleum, and palm oil derived from natural product. Among these, a softener derived from mineral and a softener derived from petroleum are preferred from the viewpoint of the crack resistance of the rubber composition.

Among the above, the softener is particularly preferably a mixture of naphthene-based oil and asphalt, or paraffin-based oil.

In the mixture of naphthene-based oil and asphalt, the naphthene-based oil may be hydrogenated naphthene-based oil, and the hydrogenated naphthene-based oil can be obtained by subjecting naphthene-based oil to hydrogenation refining in advance with a high-temperature and high-pressure hydrogenation refining technique. On the other hand, the asphalt preferably contains 5 mass% or less of an asphaltene component from the viewpoint of the compatibility with the rubber component (a) and the effect as a softener. The asphaltene component is quantified by composition analysis measured in accordance with the JPI method (the Japan Petroleum Institute method).

For the rubber composition of the present disclosure, the SP value of the softener (d) is preferably 4 or less and more preferably 3 or less. When the SP value of the softener (d) is 4 or less, it is possible to prevent local softener (d), which acts as fracture nuclei, in the rubber composition, thereby further improving the crack resistance of the rubber composition

and improving the fracture resistance. The lower limit of the SP value of the softener (d) is not particularly limited, yet it is preferably 0.01 or more.

As used herein, the SP value of the softener (d) means a solubility parameter calculated using the numerical formula of Hansen. More specifically, it means a numerical value calculated from the dipole interaction energy between molecules and the energy produced by hydrogen bonding among the three parameters of Hansen.

The weight-average molecular weight (Mw) of the softener (d) is preferably 2000 or less and more preferably 1500 or less. When the weight-average molecular weight (Mw) of the softener (d) is 2000 or less, it is possible to prevent local softener (d), which acts as fracture nuclei, in the rubber composition, thereby further improving the crack resistance of the rubber composition. The lower limit of the weight-average molecular weight (Mw) of the softener (d) is not particularly limited, yet it is preferably 400 or more.

As used herein, the weight-average molecular weight (Mw) of the softener (d) is a polystyrene-equivalent value measured by gel permeation chromatography (GPC).

The content of the softener (d) is preferably 0.1 parts by mass to 150 parts by mass, more preferably 1 part by mass to 130 parts by mass, and still more preferably 5 parts by mass to 110 parts by mass, with respect to 100 parts by mass of the rubber component (a). When the content of the softener (d) is 0.1 parts by mass or more with respect to 100 parts by mass of the rubber component (a), the operability of the rubber composition is further improved. When the content is 150 parts by mass or less, the crack resistance of the rubber composition is further improved.

The rubber composition preferably further contains a filler (e). When the rubber composition contains a filler (e), the reinforcing properties and the wear resistance of the vulcanized rubber composition of the present disclosure can be improved. The filler (e) is not particularly limited, and examples thereof include carbon black, silica, aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate. Among these, carbon black, silica and aluminum hydroxide are preferred, and carbon black and silica are more preferred. These fillers may be used alone or in combination of two or more.

Examples of the carbon black include GPF, FEF, HAF, ISAF, and SAF grade carbon black.

Examples of the silica include wet silica (hydrous silicic acid), dry silica (silicic acid anhydride), calcium silicate, and aluminum silicate, among which wet silica is preferred.

The aluminum hydroxide is preferably HIGILITE® (HIGILITE is a registered trademark in Japan, other countries, or both, and it is manufactured by Showa Denko K.K.) or the like.

The content of the filler (e) is not particularly limited and may be appropriately selected depending on the intended purpose. However, it is preferably 10 parts by mass to 120 parts by mass, more preferably 20 parts by mass to 100 parts by mass, and particularly preferably 30 parts by mass to 80 parts by mass, with respect to 100 parts by mass of the rubber component (a). When the content of the filler is 10 parts by mass or more, the effect of the filler of improving the reinforcing properties can be sufficiently obtained. When the content is 120 parts by mass or less, good operability can be maintained.

Further, the rubber composition preferably further contains a silane coupling agent to improve the blending effect of the silica. The silane coupling agent is not particularly limited, and examples thereof include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. These silane coupling agents may be used alone or in combination of two or more.

The content of the silane coupling agent is preferably in a range of 2 parts by mass to 20 parts by mass and more preferably in a range of 5 parts by mass to 15 parts by mass, with respect to 100 parts by mass of the silica. When the content of the silane coupling agent is 2 parts by mass or more with respect to 100 parts by mass of the silica, the effect of the silica is sufficiently improved. When the content of the silane coupling agent is 20 parts by mass or less with respect to 100 parts by mass of the silica, the possibility of gelation of the rubber component (a) is low.

The rubber composition preferably further contains a crosslinking agent. The crosslinking agent is not particularly limited and may be appropriately selected depending on the intended purpose. Examples thereof include a sulfur-based crosslinking agent, an organic peroxide-based crosslinking agent, an inorganic crosslinking agent, a polyamine crosslinking agent, a resin crosslinking agent, a sulfur compound-based crosslinking agent, and an oxime-nitrosamine-based crosslinking agent. Among these crosslinking agents, a sulfur-based crosslinking agent (vulcanizing agent) is more preferred for a rubber composition for a tire.

The content of the crosslinking agent is not particularly limited and may be appropriately selected depending on the intended purpose. However, it is preferably 0.1 parts by mass to 20 parts by mass with respect to 100 parts by mass of

the rubber component (a).

When the vulcanizing agent is used, a vulcanization accelerator may be used in combination. Examples of the vulcanization accelerator include guanidine-based, aldehyde-amine-based, aldehyde-ammonia-based, thiazole-based, sulfenamide-based, thiourea-based, thiuram-based, dithiocarbamate-based, and xanthate-based compounds.

The rubber composition may contain other components such as a vulcanizing co-agent, a coloring agent, a flame retardant, a lubricant, a plasticizer, a processing aid, an antioxidant, an age resistor, an anti-scorch agent, an ultraviolet ray protecting agent, an antistatic agent, a color protecting agent, and other coupling agents, if necessary, depending on the intended purpose.

<Tire tread>

The tire tread of the present disclosure uses the vulcanized rubber composition of the present disclosure described above. Because the tire tread of the present disclosure uses the vulcanized rubber composition described above, when it is applied to a tire, the tire is excellent in both on-ice performance and wear resistance.

<Tire>

The tire of the present disclosure includes the tire tread of the present disclosure described above. Because the tire of the present disclosure uses the tire tread described above, it is excellent in both on-ice performance and wear resistance. Because the tire of the present disclosure is excellent in both on-ice performance and wear resistance, it is particularly useful as a winter tire such as a studless tire.

The tire of the present disclosure may be obtained by subjecting an unvulcanized rubber composition to molding and then to vulcanization, or may be obtained by subjecting a semi-vulcanized rubber, which has undergone a preliminary vulcanization step or the like, to molding and then to main vulcanization, depending on the type and member of the tire to be applied. The gas to be filled in the tire may be normal air, air in which oxygen partial pressure has been adjusted, or an inert gas such as nitrogen, argon, or helium.

EXAMPLES

The following describes the present disclosure in more detail with reference to examples, yet the present disclosure is not limited to the following examples.

<Method of analyzing copolymer>

The number-average molecular weight (Mn), the weight-average molecular weight (Mw), the molecular weight distribution (Mw/Mn), the contents of butadiene unit, ethylene unit and styrene unit, the melting point, the absorption peak energy, the glass-transition temperature, and the degree of crystallinity of the copolymer synthesized as described below were measured and the main chain structure was determined with the following method.

(1) Number-average molecular weight (Mn), weight-average molecular weight (Mw), and molecular weight distribution (Mw/Mn)

The polystyrene-equivalent number-average molecular weight (Mn), weight-average molecular weight (Mw), and molecular weight distribution (Mw/Mn) of the copolymer were obtained by gel permeation chromatography [GPC: HLC-8121GPC/HT manufactured by Tosoh, column: two $GMH_{HR}$-H(S)HTs manufactured by Tosoh, detector: differential refractometer (RI)] using monodisperse polystyrene as a reference. The measurement temperature was 40 °C.

(2) Contents of butadiene unit, ethylene unit and styrene unit

The contents (mol%) of butadiene unit, ethylene unit, and styrene unit in the copolymer were obtained from the integral ratio of each peak in $^1$H-NMR spectrum (100 °C, d-tetrachloroethane standard: 6 ppm).

(3) Melting point ($T_m$)

The melting point of the copolymer was measured using differential scanning calorimeter (DSC, "DSCQ2000" manufactured by TA Instruments Japan Inc.), according to JIS K 7121-1987.

(4) Absorption peak energy

The temperature was raised from -150 °C to 150 °C at a heating rate of 10 °C/min, and the absorption peak energy at 0 °C to 120 °C during the temperature rising (1st run) was measured using differential scanning calorimeter (DSC, "DSCQ2000" manufactured by TA Instruments Japan Inc.), according to JIS K 7121-1987.

(5) Glass-transition temperature (Tg)

The glass-transition temperature (Tg) of the copolymer was measured using differential scanning calorimeter (DSC, "DSCQ2000" manufactured by TA Instruments Japan Inc.), according to JIS K 7121-1987.

(6) Degree of crystallinity

The crystal melting energy of 100 % crystalline polyethylene and the melting peak energy of the obtained copolymer were measured, and the degree of crystallinity was calculated from the energy ratio of the polyethylene and the copolymer. The melting peak energy was measured with differential scanning calorimeter (DSC, "DSCQ2000" manufactured by TA Instruments Japan Inc.).

(7) Determination of main chain structure

The $^{13}$C-NMR spectrum of the synthesized copolymer was measured.

<Method of synthesizing ternary copolymer>

First, 160 g of styrene and 600 mL of toluene were added to a sufficiently dried 1000 mL pressure-resistant stainless steel reactor.

In a glove box in a nitrogen atmosphere, 0.25 mmol of mono(bis(1,3-tert-butyldimethylsilyl)indenyl)bis(bis(dimethylsilyl)amide gadolinium complex $\{1,3\text{-}[(t\text{-}Bu)Me_2Si]_2C_9H_5Gd[N(SiHMe_2)_2)]_2\}$, 0.275 mmol of dimethylanilinium tetrakis(pentafluorophenyl)borate $[Me_2NHPhB(C_6F_5)_4]$, and 1.1 mmol of diisobutylaluminum hydride were charged in a glass container, and the charged materials were dissolved in 40 mL of toluene to obtain a catalytic solution.

The catalyst solution was added to the pressure-resistant stainless steel reactor and heated to 70 °C.

Next, ethylene was charged into the pressure-resistant stainless steel reactor at a pressure of 1.5 MPa, and 80 mL of a toluene solution containing 20 g of 1,3-butadiene was further charged into the pressure-resistant stainless steel reactor over 8 hours. Copolymerization was performed at 70 °C for a total of 8.5 hours.

Next, 1 ml of an isopropanol solution of 5 mass% of 2,2'-methylene-bis(4-ethyl-6-t-butylphenol) (NS-5) was added to the pressure-resistant stainless steel reactor to terminate the reaction.

Next, the copolymer was separated using a large amount of methanol and vacuum dried at 50 °C to obtain a ternary copolymer.

The number-average molecular weight (Mn), the weight-average molecular weight (Mw), the molecular weight distribution (Mw/Mn), the contents of butadiene unit, ethylene unit and styrene unit, the melting point ($T_m$), the absorption peak energy, the glass-transition temperature (Tg), and the degree of crystallinity of the obtained ternary copolymer were measured with the methods described above. The results are listed in Table 1.

In addition, the main chain structure of the obtained ternary copolymer was determined with the method described above. Because no peak was observed at 10 ppm to 24 ppm in the $^{13}$C-NMR spectrum chart, it was determined that the main chain of the synthesized ternary copolymer consisted only of an acyclic structure.

<Method of synthesizing binary copolymer>

First, 2,000 g of a toluene solution containing 120 g (2.22 mol) of 1,3-butadiene was added to a sufficiently dried 4 L stainless steel reactor, and then ethylene was introduced at 1.72 MPa. On the other hand, in a glove box in a nitrogen atmosphere, 28.5 μmol of bis(2-phenylindenyl) gadolinium bis(dimethylsilylamide) $[(2\text{-}PhC_9H_6)_2GdN(SiHMe_2)_2]$, 28.5 μmol of dimethylanilinium tetrakis(pentafluorophenyl)borate $[Me_2NHPhB(C_6F_5)_4]$, and 2.00 mmol of diisobutylaluminum hydride were charged in a glass container, and the charged materials were dissolved in 40 mL of toluene to obtain a catalytic solution. Next, the catalyst solution was taken out from the glove box and added to a monomer solution at an amount of 25.0 μmol in terms of gadolinium, and polymerization was performed at 50 °C for 90 minutes. After the polymerization, 5 ml of an isopropanol solution of 5 mass% of 2,2'-methylene-bis(4-ethyl-6-t-butylphenol) (NS-5) was added to terminate the reaction, and the copolymer was separated using a large amount of methanol and vacuum dried at 70 °C to obtain a binary copolymer.

The number-average molecular weight (Mn), the weight-average molecular weight (Mw), the molecular weight distribution (Mw/Mn), the contents of ethylene unit and butadiene unit, the melting point ($T_m$), the absorption peak energy, the glass-transition temperature (Tg), and the degree of crystallinity of the obtained binary copolymer were measured with the methods described above. The results are listed in Table 1.

Table 1

| | | Ternary copolymer | Binary copolymer |
|---|---|---|---|
| Number-average molecular weight (Mn) | $\times 10^3$ | 163 | 121 |
| Weight-average molecular weight (Mw) | $\times 10^3$ | 399 | 473 |
| Molecular weight distribution (Mw/Mn) | - | 2.4 | 3.88 |
| Content of butadiene unit | mol% | 8 | 57 |
| Content of ethylene unit | mol% | 85 | 43 |
| Content of styrene unit | mol% | 7 | 0 |
| Melting point | °C | 63 | 120 |
| Absorption peak energy | J/g | 43.1 | 48.4 |
| Glass-transition temperature | °C | -28 | -103 |
| Degree of crystallinity | % | 14.7 | 16.5 |

<Preparation and evaluation of vulcanized rubber composition>

Rubber compositions were produced using a normal Banbury mixer according to the formulations listed in Table 2. The obtained rubber compositions were vulcanized at 160 °C for 15 minutes to prepare samples of vulcanized rubber compositions of Comparative Examples 1 to 5 and Examples 1 to 5.

In addition, rubber compositions are produced using a normal Banbury mixer according to the formulations listed in Table 2. The obtained rubber compositions are vulcanized at 160 °C for 15 minutes to prepare samples of vulcanized rubber compositions of Comparative Examples 6 and 7.

With respect to each sample thus obtained, the average diameter of voids and the void fraction are measured and the wear resistance and the on-ice performance are evaluated with the following methods. The results are listed in Table 2.

(8) Average diameter of voids and void fraction

The samples of the vulcanized rubber compositions of Comparative Examples 1 to 5 and Examples 1 to 5 were each cut at an arbitrary position, and then the cut surface was observed at a magnification of 50 using a digital microscope ("VHX-100" manufactured by Keyence Corporation). The diameter (longest diameter) of all the voids in an observation field of view (2.5 mm × 2.5 mm) was measured, and the average of the diameters of all the voids was calculated and taken as the average diameter of the voids. Further, the weight of each sample of the cut vulcanized rubber composition was measured using a precision electronic balance, and the difference from a theoretical weight ((theoretical weight - measured weight) × 100) was defined as the void fraction (%).

Further, the samples of the vulcanized rubber compositions of Comparative Examples 6 and 7 are each cut at an arbitrary position, and then the cut surface is observed at a magnification of 50 using a digital microscope ("VHX-100" manufactured by Keyence Corporation). The diameter (longest diameter) of all the voids in an observation field of view (2.5 mm × 2.5 mm) is measured, and the average of the diameters of all the voids is calculated and taken as the average diameter of the voids. Further, the weight of each sample of the cut vulcanized rubber composition is measured using a precision electronic balance, and the difference from a theoretical weight ((theoretical weight - measured weight) × 100) is defined as the void fraction (%).

(9) Wear resistance

The wear loss of the samples of the vulcanized rubber compositions of Comparative Examples 1 to 5 and Examples 1 to 5 was measured according to the method B of the sliding wear test of JIS K 7218 (1986). The measurement temperature was room temperature (23 °C) and the load was 16 N.

The wear loss of the samples of the vulcanized rubber compositions of Comparative Examples 6 and 7 is measured according to the method B of the sliding wear test of JIS K 7218 (1986). The measurement temperature is room

temperature (23 °C) and the load was 16 N.

The evaluation is expressed in an index with the reciprocal of the wear loss of the vulcanized rubber of Comparative Example 5 being 100. The larger the index value is, the smaller the wear loss is, and the better the wear resistance is.

(10) On-ice performance

The samples of the vulcanized rubber compositions of Comparative Examples 1 to 5 and Examples 1 to 5 were each subjected to molding to obtain a test piece having a diameter of 50 mm and a thickness of 10 mm. Then, the frictional force generated when the test piece was pressed against fixed ice and rotated was detected by a load cell, and the coefficient of dynamic friction μ was calculated. The measurement temperature was -2 °C, the contact pressure was 12 $kgf/cm^2$, and the circumferential speed of the rotation of the sample was 20 cm/sec.

The samples of the vulcanized rubber compositions of Comparative Examples 6 and 7 are each subjected to molding to obtain a test piece having a diameter of 50 mm and a thickness of 10 mm. Then, the frictional force generated when the test piece is pressed against fixed ice and rotated is detected by a load cell, and the coefficient of dynamic friction μ is calculated. The measurement temperature is -2 °C, the contact pressure is 12 $kgf/cm^2$, and the circumferential speed of the rotation of the sample is 20 cm/sec.

The evaluation is expressed in an index with the coefficient of dynamic friction μ of Comparative Example 5 being 100. The larger the index value is, the larger the coefficient of dynamic friction μ is, and the better the on-ice performance is.

Table 2

| | | | Comparative Example 1 | Comparative Example 2 | Comparative Example 3 | Comparative Example 4 | Comparative Example 5 | Example 1 | Example 2 | Example 3 | Example 4 | Example 5 | Comparative Example 6 | Comparative Example 7 |
|---|---|---|---|---|---|---|---|---|---|---|---|---|---|---|
| Blending components | Natural rubber *1 | Part by mass | 45 | 40 | 35 | 25 | 45 | 40 | 35 | 25 | 25 | 35 | 35 | 25 |
| | Butadiene rubber *2 | | 55 | 55 | 55 | 55 | 55 | 55 | 55 | 55 | 55 | 55 | 55 | 55 |
| | Ternary copolymer *3 | | - | 5 | 10 | 20 | - | 5 | 10 | 20 | 20 | 10 | - | - |
| | Binary copolymer *4 | | - | - | - | - | - | - | - | - | - | - | 10 | 20 |
| | Carbon black *5 | | 30 | 30 | 30 | 30 | 30 | 30 | 30 | 30 | 30 | 30 | 30 | 30 |
| | Process oil *6 | | 20 | 20 | 20 | 20 | 20 | 20 | 20 | 20 | 20 | 20 | 20 | 20 |
| | Silica *7 | | 40 | 40 | 40 | 40 | 40 | 40 | 40 | 40 | 40 | 40 | 40 | 40 |
| | Silane coupling agent *8 | | 4 | 4 | 4 | 4 | 4 | 4 | 4 | 4 | 4 | 4 | 4 | 4 |
| | Stearic acid | | 2 | 2 | 2 | 2 | 2 | 2 | 2 | 2 | 2 | 2 | 2 | 2 |
| | Wax *9 | | 1.5 | 1.5 | 1.5 | 1.5 | 1.5 | 1.5 | 1.5 | 1.5 | 1.5 | 1.5 | 1.5 | 1.5 |
| | Age resistor *10 | | 1.5 | 1.5 | 1.5 | 1.5 | 1.5 | 1.5 | 1.5 | 1.5 | 1.5 | 1.5 | 1.5 | 1.5 |
| | Resin *11 | | 10 | 10 | 10 | 10 | 10 | 10 | 10 | 10 | 10 | 10 | 10 | 10 |
| | Hydrophilic short fiber *12 | | - | - | - | - | - | - | - | - | - | 8 | - | - |
| | Zinc oxide *13 | | 2 | 2 | 2 | 2 | 2 | 2 | 2 | 2 | 2 | 2 | 2 | 2 |
| | Vulcanization accelerator CZ *14 | | 1.5 | 1.5 | 1.5 | 1.5 | 1.5 | 1.5 | 1.5 | 1.5 | 1.5 | 1.5 | 1.5 | 1.5 |
| | Vulcanization accelerator MBTS*15 | | 1 | 1 | 1 | 1 | 1 | 1 | 1 | 1 | 1 | 1 | 1 | 1 |
| | Sulfur | | 1 | 1 | 1 | 1 | 1 | 1 | 1 | 1 | 1 | 1 | 1 | 1 |
| | Foaming agent *16 | | - | - | - | - | 3 | 4 | 4 | 4 | 5 | 4 | 4 | 4 |

(continued)

| | | | Comparative Example 1 | Comparative Example 2 | Comparative Example 3 | Comparative Example 4 | Comparative Example 5 | Example 1 | Example 2 | Example 3 | Example 4 | Example 5 | Comparative Example 6 | Comparative Example 7 |
|---|---|---|---|---|---|---|---|---|---|---|---|---|---|---|
| Property | Average diameter of voids | μm | - | - | - | - | 166 | 142 | 168 | 145 | 150 | 246 | 143 | 146 |
| | Void ratio | % | 0 | 0 | 0 | 0 | 24 | 26 | 31 | 37 | 37 | 32 | 32 | 36 |
| Evaluation result | Wear resistance | Index | 170 | 117 | 116 | 162 | 100 | 112 | 104 | 141 | 116 | 108 | 97 | 98 |
| | On-ice performance | Index | 51 | 52 | 49 | 48 | 100 | 109 | 128 | 124 | 122 | 135 | 98 | 91 |

* 1 Natural rubber: TSR20
* 2 Butadiene rubber: manufactured by JSR, product name "BR01"
* 3 Ternary copolymer: ternary copolymer synthesized with the method described above
* 4 Binary copolymer: binary copolymer synthesized with the method described above
* 5 Carbon black: SAF grade carbon black, manufactured by Asahi Carbon Co., Ltd., product name "ASAHI #105"
* 6 Process oil: petroleum-based hydrocarbon process oil, manufactured by Idemitsu Kosan Co.,Ltd, product name "DAIANA PROCESS OIL NS-28"
* 7 Silica: manufactured by Tosoh Silica Corporation, product name "Nipsil AQ"
* 8 Silane coupling agent: bistriethoxysilylpropyl polysulfide, manufactured by Shin-Etsu Chemical Co., Ltd.
* 9 Wax: Microcrystalline wax, manufactured by SEIKO CHEMICAL CO.,LTD.
* 10 Age resistor: manufactured by OUCHI SHINKO CHEMICAL INDUSTRIAL CO.,LTD, product name "NOCRAC 6C"
* 11 Resin: aliphatic hydrocarbon resin, manufactured by Mitsui Petrochemical Industries, product name "HI-REZ G-100X"
* 12 Hydrophilic short fiber: hydrophilic short fiber prepared with the following method

According to Production Example 3 described in JP 2012-219245 A, a hydrophilic short fiber was prepared by using two twin screw extruders, charging 40 parts by mass of polyethylene [Novatec HJ360 manufactured by Japan Polyethylene Corporation (MFR: 5.5, melting point: 132 °C)] and 40 parts by mass of ethylene-vinyl alcohol copolymer [EVAL F104B manufactured by Kuraray Co., Ltd. (MFR: 4.4, melting point: 183 °C)] into a hopper, pressing each from a die outlet at the same time, and cutting the fiber thus obtained with a conventional method to a length of 2 mm to obtain a hydrophilic short fiber in which a coating layer formed of polyethylene was formed on the surface of a core formed of an ethylene-vinyl alcohol copolymer.

* 13 Zinc oxide: manufactured by HakusuiTech Co., Ltd.
* 14 Vulcanization accelerator CZ: N-cyclohexyl-2-benzothiazolyl sulphenamide, manufactured by Ouchi Shinko Chemical Industrial Co., Ltd., product name "Noccelar CZ"
* 15 Vulcanization accelerator MBTS: di-2-benzothiazolyl disulfide, manufactured by Ouchi Shinko Chemical Industrial Co., Ltd., product name "Noccelar DM-P"
* 16 Foaming agent: dinitrosopentamethylenetetramine, manufactured by SANKYO KASEI CO.,LTD., product name "Cellmic AN"

It can be seen from Table 2 that the vulcanized rubber compositions of the examples according to the present disclosure have both high-level on-ice performance and high-level wear resistance.

INDUSTRIAL APPLICABILITY

According to the present disclosure, it is possible to provide a vulcanized rubber composition with which both the on-ice performance and the wear resistance of a tire can be achieved at a high level.
In addition, according to the present disclosure, it is possible to provide a tire tread and a tire excellent in both on-ice performance and wear resistance.

REFERENCE SIGNS LIST

10 vulcanized rubber composition
20 void

**Claims**

1. A vulcanized rubber composition comprising a rubber component that contains a multicomponent copolymer containing a conjugated diene unit, a non-conjugated olefin unit and an aromatic vinyl unit, wherein

   the non-conjugated olefin unit of the multicomponent copolymer is an acyclic non-conjugated olefin unit and the acyclic non-conjugated olefin unit of the multicomponent copolymer consists only of an ethylene unit; wherein the vulcanized rubber composition has a plurality of voids, and an average diameter of the voids is 10 μm to 300 μm, and, wherein the vulcanized rubber composition has a void fraction of 10 % to 80 %,
   wherein the void fraction is a ratio (vol%) of the volume of the voids in the vulcanized rubber composition, and wherein the void fraction and the average diameter of the voids are determined as described in the description.

2. The vulcanized rubber composition according to claim 1,
wherein the multicomponent copolymer has a content of the conjugated diene unit of 1 mol% to 50 mol%, a content of the non-conjugated olefin unit of 40 mol% to 97 mol%, and a content of the aromatic vinyl unit of 2 mol% to 35 mol%.

3. The vulcanized rubber composition according to claim 1 or 2, wherein the multicomponent copolymer has a melting point of 30 °C to 130 °C which is measured by a differential scanning calorimeter (DSC).

4. The vulcanized rubber composition according to any one of claims 1 to 3, wherein the multicomponent copolymer has absorption peak energy of 10 J/g to 150 J/g which is measured by a differential scanning calorimeter (DSC) at 0 °C to 120 °C.

5. The vulcanized rubber composition according to any one of claims 1 to 4, wherein the multicomponent copolymer has a glass-transition temperature of 0 °C or lower which is measured by a differential scanning calorimeter (DSC).

6. The vulcanized rubber composition according to any one of claims 1 to 5, wherein the multicomponent copolymer has a degree of crystallinity of 0.5 % to 50 %.

7. The vulcanized rubber composition according to any one of claims 1 to 6, wherein the aromatic vinyl unit of the multicomponent copolymer contains a styrene unit.

8. The vulcanized rubber composition according to any one of claims 1 to 7, wherein the conjugated diene unit of the multicomponent copolymer contains either or both of a 1,3-butadiene unit and an isoprene unit.

9. The vulcanized rubber composition according to any one of claims 1 to 8, wherein the rubber component has a content of the multicomponent copolymer of 5 mass% to 100 mass%.

10. The vulcanized rubber composition according to any one of claims 1 to 9, wherein the vulcanized rubber composition further contains a void introducing agent.

11. The vulcanized rubber composition according to claim 10, wherein the void introducing agent is at least one selected from the group consisting of a foaming agent, a hydrophilic short fiber, a metal sulfate, a heat-expandable microcapsule, and a porous cellulose particle.

12. A tire tread using the vulcanized rubber composition according to any one of claims 1 to 11.

13. A tire comprising the tire tread according to claim 12.

## Patentansprüche

1. Vulkanisierte Kautschukzusammensetzung, die eine Kautschukkomponente umfasst, die ein Mehrkomponentencopolymer enthält, das eine konjugierte Dieneinheit, eine nicht-konjugierte Olefineinheit und eine aromatische Vinyleinheit enthält, wobei

   die nicht-konjugierte Olefineinheit des Mehrkomponentencopolymers eine acyclische nicht-konjugierte Olefineinheit ist und die acyclische nicht-konjugierte Olefineinheit des Mehrkomponentencopolymers nur aus einer Ethyleneinheit besteht; wobei
   die vulkanisierte Kautschukzusammensetzung eine Vielzahl von Hohlräumen aufweist und ein durchschnittlicher Durchmesser der Hohlräume 10 μm bis 300 μm beträgt, und wobei die vulkanisierte Kautschukzusammensetzung einen Hohlraumanteil von 10 % bis 80 % aufweist,
   wobei der Hohlraumanteil ein Verhältnis (Vol.-%) des Volumens der Hohlräume in der vulkanisierten Kautschukzusammensetzung ist und wobei der Hohlraumanteil und der durchschnittliche Durchmesser der Hohlräume wie in der Beschreibung angegeben bestimmt werden.

2. Vulkanisierte Kautschukzusammensetzung nach Anspruch 1, wobei das Mehrkomponentencopolymer einen Gehalt an konjugierten Dieneinheiten von 1 Mol-% bis 50 Mol-%, einen Gehalt an nicht-konjugierten Olefineinheiten von 40 Mol-% bis 97 Mol-% und einen Gehalt an aromatischen Vinyleinheiten von 2 Mol-% bis 35 Mol-% aufweist.

3. Vulkanisierte Kautschukzusammensetzung nach Anspruch 1 oder 2, wobei das Mehrkomponentencopolymer einen Schmelzpunkt von 30 °C bis 130 °C aufweist, der mit einem Differential-Scanning-Kalorimeter (DSC) gemessen wird.

4. Vulkanisierte Kautschukzusammensetzung nach einem der Ansprüche 1 bis 3, wobei das Mehrkomponentencopolymer eine Absorptionsspitzenenergie von 10 J/g bis 150 J/g aufweist, die mit einem Differentialscanningkalorimeter (DSC) bei 0 °C bis 120 °C gemessen wird.

5. Vulkanisierte Kautschukzusammensetzung nach einem der Ansprüche 1 bis 4, wobei das Mehrkomponentencopolymer eine Glasübergangstemperatur von 0 °C oder weniger aufweist, die mit einem Differential-Scanning-Kalorimeter (DSC) gemessen wird.

6. Vulkanisierte Kautschukzusammensetzung nach einem der Ansprüche 1 bis 5, wobei das Mehrkomponentencopolymer einen Kristallinitätsgrad von 0,5 % bis 50 % aufweist.

7. Vulkanisierte Kautschukzusammensetzung nach einem der Ansprüche 1 bis 6, wobei die aromatische Vinyleinheit des Mehrkomponentencopolymers eine Styroleinheit enthält.

8. Vulkanisierte Kautschukzusammensetzung nach einem der Ansprüche 1 bis 7, wobei die konjugierte Dieneinheit des Mehrkomponentencopolymers eines oder beides von einer 1,3-Butadieneinheit und einer Isopreneinheit enthält.

9. Vulkanisierte Kautschukzusammensetzung nach einem der Ansprüche 1 bis 8, wobei die Kautschukkomponente einen Gehalt des Mehrkomponentencopolymers von 5 Masse-% bis 100 Masse-% aufweist.

10. Vulkanisierte Kautschukzusammensetzung nach einem der Ansprüche 1 bis 9, wobei die vulkanisierte Kautschukzusammensetzung zusätzlich ein hohlraumbildendes Mittel enthält.

11. Vulkanisierte Kautschukzusammensetzung nach Anspruch 10, wobei das hohlraumbildende Mittel mindestens eines ist ausgewählt aus der Gruppe bestehend aus einem Schaumbildner, einer hydrophilen Kurzfaser, einem Metallsulfat, einer wärmeexpandierbaren Mikrokapsel und einem porösen Celluloseteilchen.

**12.** Reifenlauffläche, die die vulkanisierte Kautschukzusammensetzung nach einem der Ansprüche 1 bis 11 verwendet.

**13.** Reifen, der die Reifenlauffläche nach Anspruch 12 umfasst.

## Revendications

**1.** Composition de caoutchouc vulcanisé comprenant un composant de caoutchouc qui contient un copolymère multicomposant contenant une unité de diène conjugué, une unité d'oléfine non conjuguée et une unité de vinyle aromatique, dans laquelle

l'unité d'oléfine non conjuguée du copolymère multicomposant est une unité d'oléfine non conjuguée acyclique et l'unité d'oléfine non conjuguée acyclique du copolymère multicomposant est constituée uniquement d'une unité d'éthylène ; dans laquelle

la composition de caoutchouc vulcanisé présente une pluralité de vides, et un diamètre moyen des vides est compris entre 10 $\mu$m et 300 $\mu$m, et, dans laquelle la composition de caoutchouc vulcanisé présente une fraction de vide comprise entre 10 % et 80 %,

dans laquelle la fraction de vide est un rapport (vol%) du volume des vides dans la composition de caoutchouc vulcanisé, et dans laquelle la fraction de vide et le diamètre moyen des vides sont déterminés comme décrit dans la description.

**2.** Composition de caoutchouc vulcanisé selon la revendication 1, dans laquelle le copolymère multicomposant a une teneur en unité diène conjugué de 1 % en mole à 50 % en mole, une teneur en unité oléfine non conjuguée de 40 % en mole à 97 % en mole, et une teneur en unité vinyle aromatique de 2 % en mole à 35 % en mole.

**3.** Composition de caoutchouc vulcanisé selon la revendication 1 ou 2, dans laquelle le copolymère multicomposant a un point de fusion de 30 °C à 130 °C, qui est mesuré par un calorimètre à balayage différentiel (DSC).

**4.** Composition de caoutchouc vulcanisé selon l'une quelconque des revendications 1 à 3, dans laquelle le copolymère multicomposant présente une énergie de pic d'absorption de 10 J/g à 150 J/g, qui est mesurée par un calorimètre à balayage différentiel (DSC) à une température comprise entre 0 °C et 120 °C.

**5.** Composition de caoutchouc vulcanisé selon l'une quelconque des revendications 1 à 4, dans laquelle le copolymère multicomposant a une température de transition vitreuse de 0 °C ou moins, mesurée par un calorimètre à balayage différentiel (DSC).

**6.** Composition de caoutchouc vulcanisé selon l'une quelconque des revendications 1 à 5, dans laquelle le copolymère multicomposant a un degré de cristallinité de 0,5 % à 50 %.

**7.** Composition de caoutchouc vulcanisé selon l'une quelconque des revendications 1 à 6, dans laquelle l'unité de vinyle aromatique du copolymère multicomposant contient une unité de styrène.

**8.** Composition de caoutchouc vulcanisé selon l'une quelconque des revendications 1 à 7, dans laquelle l'unité de diène conjugué du copolymère multicomposant contient une unité de 1,3-butadiène et une unité d'isoprène, ou les deux.

**9.** Composition de caoutchouc vulcanisée selon l'une quelconque des revendications 1 à 8, dans laquelle le composant de caoutchouc a une teneur en copolymère multicomposant de 5 % en masse à 100 % en masse.

**10.** Caoutchouc de caoutchouc vulcanisé selon l'une quelconque des revendications 1 à 9, dans lequel la composition de caoutchouc vulcanisé contient en outre un agent d'introduction de vide.

**11.** Composition de caoutchouc vulcanisé selon la revendication 10, dans laquelle l'agent d'introduction de vide est au moins un agent choisi dans le groupe constitué d'un agent moussant, une fibre courte hydrophile, un sulfate métallique, une microcapsule thermo-expansible et une particule de cellulose poreuse.

**12.** Bande de roulement de pneumatique utilisant une composition de caoutchouc vulcanisé selon l'une quelconque des revendications 1 à 11.

**13.** Pneumatique comprenant la bande de roulement de pneumatique selon la revendication 12.

FIG. 1

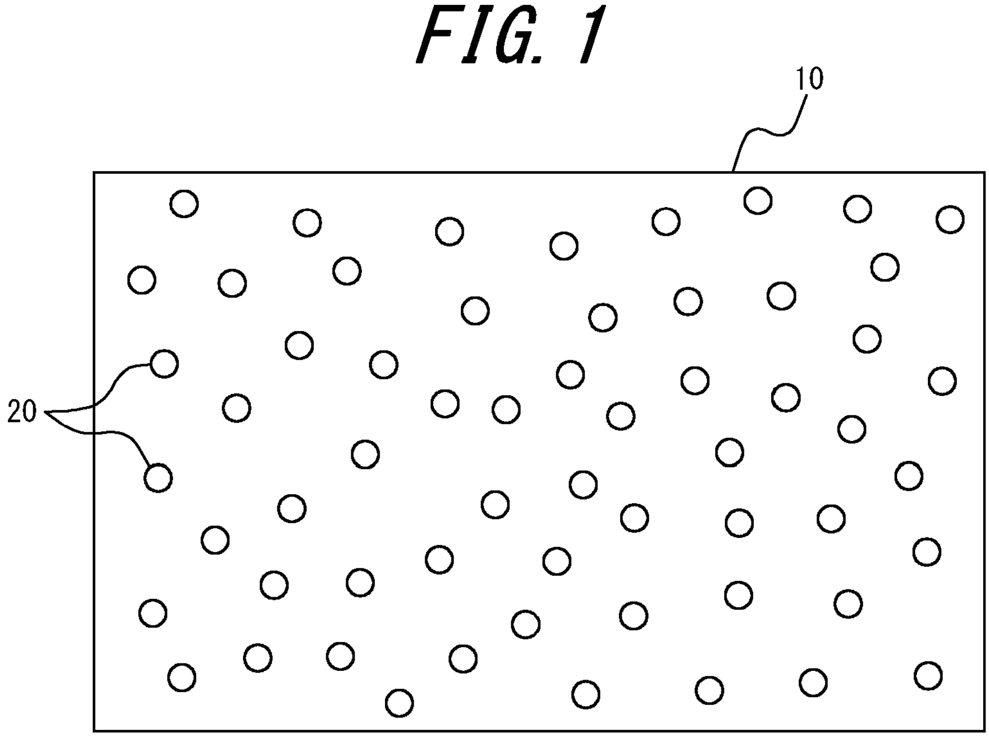


FIG. 2

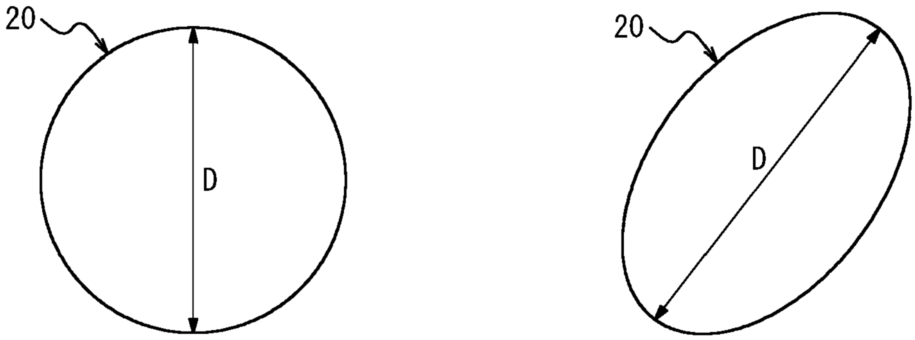

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008303334 A
- JP 2001323095 A
- JP 2004115284 A
- JP 2012219245 A